# EUROPÄISCHE PATENTSCHRIFT

(11) **EP 4 475 969 B1**
(45) Veröffentlichungstag und Bekanntmachung des Hinweises auf die Patenterteilung: **27.05.2026**
(21) Anmeldenummer: 23704692.5
(22) Anmeldetag: 08.02.2023
(51) Int. Cl.: A63B 55/00, A63B 55/40, A63B 55/60, B62B 3/02, B62B 3/10, B62B 3/12

(54) **GOLFTASCHE UND GOLFTROLLEY, SOWIE GOLFTASCHEN-GOLFTROLLEY-EINHEIT**
GOLF BAG AND GOLF TROLLEY, AND GOLF BAG-GOLF TROLLEY UNIT
SAC DE GOLF ET CHARIOT DE GOLF, ET UNITÉ DE SAC DE GOLF/CHARIOT DE GOLF

(30) Priorität: 09.02.2022 CH 1142022; 04.10.2022 CH 11532022
(43) Veröffentlichungstag der Anmeldung: 18.12.2024
(73) Patentinhaber: Fuchs, Roman, 7307 Jenins (CH); Fuchs, Mario, 7226 Fajauna (CH)
(72) Erfinder: RUFFNER, Walter, 7304 Maienfeld (CH); FUCHS, Roman, 7307 Jenins (CH); FUCHS, Mario, 7226 Fajauna (CH)
(74) Vertreter: Swisspat Riederer Hasler Patentanwälte AG
(86) Internationale Anmeldenummer: PCT/CH2023/050004
(87) Internationale Veröffentlichungsnummer: WO 2023/150894

(56) Entgegenhaltungen:
- EP-B1- 2 819 908
- FR-A1- 2 749 768
- US-B1- 10 471 314

## Beschreibung

Die Erfindung betrifft eine Golftasche gemäss Oberbegriff von Anspruch 1, einen Golftrolley gemäss Oberbegriff von Anspruch 7, sowie eine Golftasche-Golftrolley-Einheit mit einer Golftasche und einem Golftrolley gemäss Anspruch 15.

### Stand der Technik

Ohne einen motorisierten Golf Caddy bewältigen Golfspieler bei einer Partie Golf üblicherweise mehrere Kilometer Laufdistanz. Sie führen dabei bis zu 14 verschiedene Golfschläger, die maximal für eine Runde Golf zugelassen sind, in einer dafür konzipierten Golftasche mit sich. Damit Golftasche und -schläger nicht ständig getragen werden müssen, führt der Spieler die Tasche normalerweise auf einem mehrrädrigen Wagen mit sich. Stand der Technik sind zwei- und dreirädrige Golfwagen, oft als Trolleys bezeichnet, die man konventionell hinter sich herzieht oder in jüngerer Zeit zunehmend auch als dreirädrige Pushtrolleys vor sich herschiebt. Beispiele von Golfhandwagen sind in den Dokumenten US 2013/0234418A1, US 2012/0261908, US 2012/0112436A1 offenbart. Die erwähnten Golfwagen zeichen sich dadurch aus, dass Golftasche und Fahrgestell getrennte Einheiten sind, die erst zur Ausübung des Sports miteinander verbunden werden. Nachteilig an diesen Golfwagen ist, dass diese oftmals nicht sehr stabil sind, beim Transport meist viel Platz beanspruchen und viel Zeit zum Aufstellen und Zusammenlegen benötigt wird.

Eine neuere Generation von Golfwagen hat die Räder und die Deichsel direkt an der Golftasche angeordnet, d.h. Räder und Deichsel sind integral mit der Golftasche und damit vergleichbar mit einem Rollkoffer, an dem zwei oder vier Räder fix angeordnet sind. Integral heisst folglich , dass Golftasche und Fahrgestell eine Einheit bilden, nachfolgend auch als Golftaschenwagen bezeichnet, und nicht trennbar sind.

Das europäische Patent EP 0 055 873 B1 offenbart einen zweirädrigen Golfhandwagen mit einer Deichsel zum Ziehen des Golfhandwagens und einem Behälter, der in mehrere Abteilungen aufgeteilt ist. Dabei ist das Radgestell teils kraftschlüssig mit dem Behälter verbunden und so angeordnet, dass in aktiver Stellung des Radgestells das Gewicht des Behälters gleichmässig verteilt und das freie Ende der Deichsel entlastet ist. Eine erste Abteilung des beschriebenen Golfhandwagens dient der Aufnahme des Radgestells und von dessen Betätigungsmechanismus in deren inaktiven Stellung, eine weitere Abteilung der Aufnahme der Golfschläger und eine dritte Abteilung ist für die Aufnahme von Zubehör verschiedener Art vorgesehen.

Soll das Radgestell aus seiner inaktiven Staustellung in die aktive Transportstellung geschwenkt werden, wird eine Arretiervorrichtung gelöst, wodurch das aus zwei Beinen bestehende Radgestell unter dem Druck einer Feder sich um einen Gelenkzapfen dreht und aus dem Behälter herausschwenkt. Beim Hochschwenken der Deichsel werden Gelenkarme und damit auch die Beine des Radgestelles auseinandergespreizt. Nachteilig an diesem Golfhandwagen ist, dass das Radgestell in Nichtgebrauchsstellung mittig im Behälter aufgenommen ist, wodurch wertvoller Platz für die Anordnung der Golfschläger innerhalb des Behälters verloren geht.

EP 2 581 291 A2 offenbart einen vierrädrigen, zusammenklappbaren Golfwagen, der sich ebenfalls von einer Nichtgebrauchsstellung in eine Gebrauchsstellung auf- bzw. zusammenklappen lässt. Der Golfwagen umfasst eine Golftasche-Wageneinheit und einen Beutel, der an der Golftasche-Wageneinheit befestigbar ist. Die Golftasche-Wageneinheit besitzt an einem zweiten Ende zwei um eine fixe erste Drehachse drehbare und voneinander beabstandete Vorderräder. In Abstand von diesen befinden sich zwei um eine zweite Drehachse drehbare Hinterräder. Diese sind von einer gefalteten Position in eine ausgeklappte oder gespreizte Position verschwenkbar. In der gefalteten Position halten die Räder die Golf-Wageneinheit in einer horizonten Lage, wobei die zweite Drehachse sich beim ersten Ende der Golftasche-Wageneinheit befindet.

Die Golftasche-Wageneinheit besitzt eine Hinterradeinheit, die über ein Befestigungsteil am Körper der Golftasche-Wageneinheit befestigt ist. Die Hinterräder der Hinterradeinheit sind via ein Auslegerrohr und eine Stange gelenkig mit einem Gleitblock verbunden, der zwischen zwei Extremlagen verschiebbar ist. Zusätzlich verbindet eine Zugstange einen Punkt des Auslegerrohrs mit dem Gleitblock. Wird der Gleitblock nun von der einen Extremposition, in der die Hinterräder nahe beieinander sind, in Richtung der anderen Extremlage verschoben, zieht die Zugstange die Hinterräder auseinander. Diese Bewegung wird zusätzlich durch Gasfedern unterstützt.

Die amerikanische Patentanmeldung veröffentlicht unter Nr. US 2013/0234420 A1 offenbart einen dreirädrigen, kombinierten Golftaschenwagen, der leicht auseinander- und zusammengeklappt werden kann und die Gestalt eines versetzten Parallelogramms hat. Der Golftaschenwagen besteht aus mehreren Unterbaugruppen, nämlich einem äusseren Rahmen, einem parallelepipedförmigen Behältnis für die Schläger, einer Vorder- und einer Hinterradeinheit, sowie einem Griff. Der äussere Rahmen umfasst eine Basisplatte, die von zwei seitlichen Balken gehalten ist und mit diesen einen Winkel von ca. 120 Grad einschliesst. An den seitlichen Balken ist auch eine Vorderrahmenhalterung angebracht, die das Behältnis für die Golfschläger stützt. Das Behältnis für die Golfschläger besteht aus einzelnen rohrförmigen Behältnissen, die sich in Längsrichtung des Behältnisses erstrecken. Die Vorderradeinheit ist über Gabelarme an der Grundplatte angeordnet und kann über einen Schwenkmachanismus von einer Position, in der die Gabelarme eine Verlängerung der Grundplatte darstellen, in eine Position, in der die Gabelarme mit dem Rad unterhalb des Golfschlägerbehältnisses angeordnet sind, verschwenkt werden.

Die Hinterradeinheit besteht aus zwei Hinterrädern, die jeweils auf einer Achsstange drehbar angeordnet sind. Die Achsstangen sind jeweils über einen Hebel an den seitlichen Balken des Rahmens angelenkt und um eine Schwenkachse verschwenkbar. Auf der Schwenkachse ist eine Drehscheibe mit zwei Einkerbungen angeordnet, in die in den beiden extremen Drehpositionen ein Anschlagpfosten eingreifen kann.

In einer alternativen Ausführungsform besteht der Golftaschenwagen aus einem Golfschlägerbehältnis, einer Transportbaugruppe, die das Transportieren auf dem Golfgelände erleichtert, und einer Erweiterungsbaugruppe, die mit den beiden anderen Baugruppen zusammenwirkt, um den Golftaschenwagen zusammen- und auseinanderzuklappen.

Das Golfschlägerbehältnis wird gebildet durch eine Bodenplatte, einen starren Kragen und eine thermogeformte Rückplatte, die Bodenplatte und Kragen verbindet. Teile des inneren Rahmens und der Bodenplatte sind in Richtung der Vorderseite des Golfschlägerbehältnisses ausgebildet, um in der Mitte einen Radhohlraum zu definieren.

Die Transportbaugruppe umfasst ein Vorderrad, das von zwei Armen gehalten ist. Die Arme sind an der Bodenplatte an einem vorderen Drehpunkt befestigt und um eine Schwenkachse verschwenkbar und zwar von einer Gebrauchsstellung, in der das Vorderrad vor der Bodenplatte angeordnet ist, in eine Nichtgebrauchsstellung, in der das Vorderrad im Radhohlraum aufgenommen ist.

Die Hinterräder sind je über zwei Parallelogrammhebel an der Rückplatte des Golfschlägerbehältnisses festgemacht. Über eine Schubstange ist einer der beiden Parallelogrammhebel mit dem verschwenkbaren Griff verbunden. Beim Verschwenken des Griffs von der Nichtgebrauchs- in die Gebrauchsstellung werden die Hinterräder ebenfalls in die Gebrauchsstellung ausgefahren. Eine am Drehgelenk ausgebildete Rampe sorgt dabei dafür, dass die Räder beim Ausfahren sich zusätzlich auseinanderbewegen.

Nachteilig an diesem Golftaschenwagen ist, dass mehrere Bügel nötig sind, um den Golftaschenwagen auf- bzw. zusammenzuklappen. So muss zuerst das Vorderrad in die Gebrauchsstellung gebracht werden und anschliessend die Hinterräder. Auch sind Golftasche und die Transportbaugruppe eine Einheit und nicht als auseinandernehmbare Einheiten konzipiert. Entsprechend ist das Gewicht dieses Golftaschenwagens relativ hoch.

Das amerikanische Patent US 8,764,030 offenbart eine Sportsackanordnung mit einem integralen Transportsystem mit Rädern. Das Besondere an der Sportsackanordnung der US 8,764,030 ist, dass das Transportsystem innerhalb der Geometrie des Sportsackes verstaut und mit einer einzigen mechanischen Bewegung in Stellung gebracht werden kann. Das Entfalten des Transportsystems geschieht durch Ziehen eines Griffs, das ein Ausfahren eines Vorderrades in entgegengesetzter Richtung und ein Spreizen zweier Hinterräder bewirkt. Zu diesem Zweck sind am U-förmigen Griff erste Zahnstangen ausgebildet, die jeweils über ein Zahnrad mit einer zweiten Zahnstange verbunden ist, an der das Vorderrad angeordnet ist. Werden die ersten Zahnstangen in die eine Richtung bewegt, bewegen sich die zweiten Zahnstangen mit dem Vorderrad in die entgegengesetzte Richtung. Die Bewegung der ersten und zweiten Zahnstangen erfolgt relativ zu einer ortsfesten Klammer der Sportsackanordnung.

Die Hinterräder sind an verschwenkbaren Beinen angeordnet, die je über einen Arm gelenkig mit den ersten Zahnstangen verbunden sind. Wird der Griff des Sportsackanordnung nach oben gezogen, spreizen sich die Beine mit den Hinterrädern. Damit die Hinterräder in der Ruhestellung in einer Ausnehmung des Sportsacks Platz finden, werden diese ebenfalls noch verschwenkt.

Der beschriebene Sportsack mit integralem Transportsystem hat den Vorteil, dass er kompakt aufgrund der Grösse gut verstaubar ist und mit einer einzigen mechanischen Bewegung aufgestellt oder zusammengefaltet werden kann. Nachteilig ist, dass das Transportsystem sehr aufwendig konstruiert und viele gelenkige Verbindungen aufweist, was dessen Stabilität negativ beeinflusst. Nachteilig ist auch, dass der Sportsack in der zusammengefalteten Position getragen werden muss, weil alle Räder eingefahren sind. Der nötige Platz für die Anordnung der Räder in der Ruheposition steht für die Anordnung der Golfschläger nicht mehr zur Verfügung, was die Länge des Sportsackes insgesamt vergrössert.

EP 2 819 908 betrifft eine Kombination eines Golf-Trolleys und einer Golftasche, die zum Tragen eines Satzes von Golfschlägern dient. Die Kombination kann von einem Transport- oder Lagerungszustand in einen Betriebszustand überführt, in dem sie über einen Golfplatz gefahren werden kann. Der Golf-Trolley verfügt über ein Fahrgestell mit einem Grundkörper und einer länglichen Grundplatte, die sich nach unten zu einem Mittelrad erstreckt. Die Grundplatte hat am unteren Ende eine um 90 Grad nach oben gekrümmte Verlängerung, die als Anschlag für eine Golftasche dient. An der Verlängerung kann eine Batterieeinheit angeordnet werden, wenn der Golf-Trolley motorisiert ist. Das Mittelrad ragt über den untersten Teil der Grundplatte hinaus, so dass der Golf-Trolley in aufrechter Position sowohl auf dem Mittelrad als auch auf den beiden koaxialen Hinterrädern steht. Ausserdem ist das Mittelrad in einen kleinen Radkasten aufgenommen, sodass das Rad nicht an Golftasche anliegen kann.

Das Mittelrad des beschriebenen Golfwagens hat einen im Vergleich zu den beiden anderen Rädern sehr kleinen Durchmesser. Dies hat den Nachteil, dass kleinere Hindernisse, wie Steine, das Fortbewegen des Golf-Trolleys erschweren.

Die Tasche ist bei diesem Produkt so konzipiert, dass sie ein integraler Bestandteil der Kombination, aber in einer alternativen Form ist sie vom Wagen abnehmbar und durch geeignete Befestigungsmittel am Fahrgestell befestigbar. Der Golf-Trolley der EP 2 819 908 ist ein All-in-One-Golfwagen, der in seiner gefalteten Position vergleichbar mit der Größe einer herkömmlichen Golftasche ist und sicher auf die Rückbank eines Autos passt.

US 10 471 314 B1 offenbart einen einen mehrrädrigen Golfwagen, der die Funktionalität eines herkömmlichen Wagens und einer Golftasche in einem einzigen Ausrüstungsteil kombiniert. Der Wagen ist so konzipiert, dass er in zwei Positionen gefaltet werden kann: eine erste gefaltete Position zum Aufbewahren und Transportieren und eine zweite ausgefahrene Position zum Gehen. Durch die Verwendung von Achsen und Halterungen sind die beiden Hinterräder an Längslenkern montiert, die dann an den unteren Chassishalterungen montiert werden. Das Mittelrad ist auf der Mittelgabel montiert, die am unteren Fahrgestell befestigt ist. Das untere Chassis ist am mittleren Chassis befestigt und letzteres wiederum am oberen Chassis. Die Schubstangenbaugruppe wird am oberen Chassis durch die Verwendung von zwei Montagekragenhalterungen befestigt.

FR 2 749 768 offenbart ein Golfset bestehend aus einem von einem Trolley gestützten Aufbewahrungselement und einer vom Aufbewahrungselement abnehmbaren Zugeinheit. Die Zugeinheit ist in der Bodenregion des Aufbewahrungselements angeordnet und an einer Vorderachse des Trolleys angedockt, wobei die Zugeinheit die gesamte Grundfläche des Aufbewahrungselements einnimmt.

Gemeinsam ist den heute auf dem Markt erhältlichen Golftaschenwagen, dass sie oftmals kompliziert aufgebaut sind und das Aufstellen resp. Auseinanderklappen der Golftaschenwagen mehrere Handgriffe benötigt. Oftmals haben gerade Frauen dann Mühe, den Golftaschenwagen in vernünftiger Zeit betriebsbereit zu machen. Auch ist deren Gewicht meist so hoch, dass Frauen Mühe haben, diese Golftaschenwagen zu händeln.

Die vorliegende Erfindung (gemäss den beigefügten Ansprüchen) bezieht sich auf eine Golftasche und einen separaten Golftrolley (Transportbaugruppe), die sich leicht zu einer Golftasche-Golftrolley-Einheit kombinieren lassen und als solche auch transportierbar ist.

### Aufgabe der Erfindung

Aufgabe der vorliegenden Erfindung ist es deshalb, eine Golftasche-Golftrolley-Einheit zur Verfügung zu stellen, die sowohl die vorteilhaften Eigenschaften einer Sportsackanordnung mit integriertem Transportsystem als auch die vorteilhaften Eigenschaften einer Golftasche bezüglich Grösse aufweist. Das heisst, dass Golftasche und Golftrolley sollen möglichst mit möglichst wenigen Handgriffen lösbar miteinander verbindbar und im vereinigten Zustand sehr kompakt und nur unwesentlich schwerer als eine Golftasche allein sein. Ziel ist es, dass Golftasche und Golftrolley, obwohl als separate Einheiten konzipiert und leicht auseinandernehmbar, als Golftasche-Golftrolley-Einheit transportierbar sind. Dabei sollte die Golftasche-Golftrolley-Einheit nicht grösser als eine konventionelle Golftasche sein. Noch ein Ziel ist, dass der Golftrolley mit einer einzigen Bewegung aufgestellt resp. zusammengefaltet werden kann. Auch sollte die aus separater Golftasche und Golftrolley bestehende Golftasche-Golftrolley-Einheit auch in zusammengefalteten Zustand nicht getragen werden müssen, d.h. rollbar sein. In der Nichtgebrauchsstellung soll die Golftasche-Golftrolley-Einheit möglichst kompakt und platzsparend sein. Noch ein Ziel ist es, einen Golftrolley so weiter zu entwickeln, dass das Fahrgestell möglichst stabil ist. Auch sollte die kombinierte Golftasche-Golftrolley-Einheit ein möglichst geringes Gewicht aufweisen. Ein weiteres Ziel ist es, dass die Golftasche-Golftrolley-Einheit von einem Golfer möglichst bequem zu führen ist. Auch wäre es vorteilhaft, wenn das Outfit der Golftasche verändert werden könnte.

### Beschreibung

Die Erfindung betrifft eine Golftasche, zur lösbaren Befestigung an einem Golftrolley, mit einem Aufnahmeraum für eine Mehrzahl von Golfschlägern, umfassend ein Bodenteil, ein Kopfteil, ein Traggestell, das das Bodenteil mit dem Kopfteil verbindet, sowie eine am Traggestell angeordnete Umhüllung, vorzugsweise aus einem textilen oder festen Material, die den Aufnahmeraum für die Golfschläger umgibt, wobei die Golftasche ausgebildet ist, um an mindestens zwei Punkten an einem dreirädrigen Fahrgestell lösbar befestigt zu werden.

Erfindungsgemäss ist die Golftasche dadurch charakterisiert, dass im Bodenteil der Golftasche ein Radkasten für die Aufnahme des Vorderrads eines dreirädrigen Golftrolleys vorgesehen ist und das Bodenteil ausgebildet ist. um sich an der Vorderachse des dreirädrigen Golftrolleys abzustützen. Das Vorsehen eines in der Golftasche integrierten Radkastens hat den Vorteil, dass sich ein entsprechend ausgebildetes Fahrgestell eines Golftrolleys zum grössten Teil innerhalb der Peripherie der Golftasche unterbringen lässt. Auch kann die Golftasche im Wesentlichen die gleiche axiale Länge wie bekannte Golftaschen haben, deren Länge im Wesentlichen durch die Länge der Golfschläger bestimmt ist. Unter «innerhalb der Peripherie der Golftasche unterbringen können» wird im Rahmen der vorliegenden Erfindung verstanden, dass das Fahrgestell des Golftrolleys von vorne oder von der Seite gesehen durch die Umhüllung der Golftasche im Wesentlichen verdeckt ist.

Vorteilhaft ist der Radkasten ein schlitzförmiger Aufnahmeraum. Dieser ist etwas breiter und höher als das aufzunehmende Vorderrad und erstreckt sich von hinten bis etwa zur Mitte des Bodenteils oder darüber hinaus. Dies hat den Vorteil, dass seitlich und vor dem Radkasten noch Platz für die Handgriffe der Golfschläger ist.

Vorzugsweise hat der Radkasten zwei einander gegenüberliegende Seitenwände, an denen seitlich auf ungefähr halber Höhe nach hinten ragende Stege angeformt sind, die miteinander fluchtende Ausnehmungen zur Aufnahme der Vorderradachse eines Golftrolleys aufweisen. Dadurch kann die Rotationsachse des Rades hinter dem Radkasten verlaufen und die Standfläche der vereinigten Golftaschen-Golftrolley-Einheit vergrössern, was für ein gutes Stehvermögen sorgt, wenn das Fahrwerk zusammengefaltet ist. Dann kann die Lauffläche des Rades in etwa mit der Standfläche des Bodenteils fluchten.

Zweckmässigerweise sind an der Unterseite des Bodenteils eine Standfläche bildende Standfüsse vorgesehen, um eine stabile Auflagefläche zu bilden.

Vorzugsweise ist der axiale Abstand zwischen der Standfläche des Bodenteils und den Ausnehmungen für die Radachse so bemessen, dass die Lauffläche eines im Radkasten aufgenommenen Vorderrads mit der Standfläche im Wesentlichen fluchtet.

Vorteilhaft ist, dass das Bodenteil einen umlaufenden Rand hat. Dies erlaubt es, die Schläger um den Radkasten herum anzuordnen. Ausserdem kann die Stoffumhüllung am Rand fixiert werden.

Gemäss einer vorteilhaften Ausführungsform ist gegenüberliegend dem Bodenteil ein Kopfteil vorgesehen, in welchem eine Ausnehmung für die Aufnahme des Tragprofils eines Golftrolleys vorgesehen ist. Dies hat den Vorteil, dass Golftrolley und Golftasche eine sehr kompakte Einheit bilden können, die kaum grösser als eine konventionelle Golftasche ist.

Vorteilhaft ist das Kopfteil mittels mehrerer Stäbe mit dem Bodenteil verbunden. Bodenteil, Kopfteil und die Stäbe bilden damit ein Gerüst für die Golftasche, das sich mit einer Umhüllung einfassen lässt.

Vorteilhaft definieren die an der Rückseite der Golftasche angeordneten Stäbe eine Aussparung für die Aufnahme eines Teils des Fahrgestells eines Goltrolleys. Dadurch kann ein Teil des Golftrolley-Fahrgestells, z.B. ein längliches Tragprofil, in der Aussparung aufgenommen sein.

Zweckmässigerweise ist auf ungefähr halber Höhe eine zwei oder mehr Stäbe verbindende Klammer vorgesehen ist, welche von oben gesehen eine ungefähr halbkreisförmige Einbuchtung definiert. In dieser Einbuchtung kann sich das aus einem Rohr gebildete Tragprofil Golftrolleys erstrecken. Das heisst, dass das Tragprofil in einem länglichen, nach hinten offenen Kanal der Golftasche verlaufen kann.

Eine alternative Ausführungsform sieht vor, dass an den Radkasten für das Vorderrad anschliessend ein nach aussen (hinten) offener Kanal für die Aufnahme des länglichen Tragprofils (15) eines Golftrolleys vorgesehen ist. Der Kanal kann beispielsweise ein Kunststoffprofil sein, das Boden- und Kopfteil miteinander verbindet. Dabei kann auch das Kopfteil eine halbkreisförmige Einbuchtung für die Aufnahme des rohrförmigen Tragprofils aufweisen.

Vorteilhaft verläuft der Kanal für das Tragprofil im Wesentlichen in der Peripherie der Umhüllung der Golftasche. Das heisst, dass das Tragprofil des Golftrolleys von der Seite gesehen praktisch nicht sichtbar ist. Dadurch ist die aus Golftasche und Golftrolley bestehende Golftasche-Golftrolley-Einheit sehr kompakt.

Vorzugsweise weist die Golftasche seitlich jeweils eine Einbuchtung für die Aufnahme der Hinterräder des Golftrolleys auf, sodass die Hinterräder eines dreirädrigen im zusammengelegten Zustand des Golftrolleys ebenfalls innerhalb der Peripherie der Umhüllung angeordnet sind (von vorne oder hinten gesehen).

Vorteilhaft weist die Umhüllung der Golftasche seitlich nach hinten ragende Seitenteile auf. Diese Seitenteile können aus einem etwas festeren Material bestehen, sodass die Golftasche beim Transport in einem Fahrzeug auf den Seitenteilen aufliegen kann. Auf jeden Fall ist es zweckmässig, wenn das Tragprofil und die Parallelogrammhebel bei zusammengefaltetem Golftrolley nicht über die Seitenteile hinausragen (von der Seite gesehen).

Zweckmässigerweise hat das Kopfteil Unterteilungen für die Aufnahme verschiedener Golfschläger, damit die Golfschläger übersichtlich angeordnet werden können.

Es ist denkbar, dass im Radkasten der Golftasche bereits ein Rad fix montiert ist. Entsprechend müsste ein Golftrolley nur noch über zwei spreizbareHinterräder verfügen.

Gegenstand der vorliegenden Erfindung ist auch ein dreirädriger Golftrolley zur Aufnahme einer Golftasche, mit einem Fahrgestell umfassend
- ein Vorderrad und zwei Hinterräder,
   - wobei die Hinterräder jeweils mittels zweier Parallelogrammhebel am Fahrgestell angelenkt sind und von einer schmalen Transportstellung in eine gespreizte Fahrstellung und umgekehrt bewegbar sind,
- eine am Fahrgestell beweglich angeordnete Lenkstange , die mittels zweier Streben mit den Parallelogrammhebeln verbunden ist, wobei die Hinterräder durch die Lenkstange von der Transportstellung in die Fahrstellung und umgekehrt bewegbar sind.

Der erfindungsgemässe Golftrolley ist weiter dadurch gekennzeichnet, dass das Vorderrad eine Achse mit beidseits axialen Verlängerungen aufweist, die an einander gegenüberliegenden Seiten des Vorderrads ein Auflager für eine Golftasche bilden. Solche axialen Verlängerungen der Radachse sind bisher nicht bekannt. Das Vorsehen solcher Achsverlängerungen hat den Vorteil, dass die Golftasche an diesen eingehängt werden kann und die Achsverlängerungen Teil einer Formschlussverbindung bilden können.

Vorteilhaft ist am Tragprofil eine Gabel mit U-förmigen Ausnehmungen vorgesehen oder ausgebildet, die der Aufnahme der Vorderradachse dienen. Die Gabel ist dabei vorzugsweise fix und nicht drehbar am Tragprofil angeordnet.

Zweckmässigerweise überragt die Achse des Vorderrads auf beiden Seiten die Gabel um eine bestimmte Distanz, beispielsweise um 0.5 bis 3 cm, damit eine Golftasche darauf abgestützt resp. eingehängt werden kann.

Vorteilhaft ist die Lenkstange über ein Verbindungsstück am Tragprofil angeordnet derart, dass die Schwenkachse sich eine bestimmte Distanz hinter dem Tragprofil befindet. Dies hat den Vorteil, dass Tragprofil und Lenkstange im zusammengefalteten Zustand im Wesentlichen parallel zueinander ausgerichtet sind und die Drehachse des Vorderrads im Abstand zum Tragprofil verläuft. Dies ermöglicht, durch Kippen des Golftrolleys nach hinten die auf diesem angeordnete Golftasche vom Boden anzuheben und den Golftrolley fortzubewegen. Dabei haben die Hinterräder Bodenkontakt.

Vorteilhaft sind im Abstand zum zweiten Ende des Tragprofils Verbindungsmittel zur Herstellung einer form- und/oder kraftschlüssigen mit einer Golftasche vorgesehen. Mit Hilfe einer Zweipunktverbindung kann eine Golftasche zuverlässig am Tragprofil des Golftrolleys befestigt werden. Eine technisch einfache Lösung sieht vor, dass die Golftasche mittels eines Riemens oder Gummibands am Tragprofil befestigbar ist. Der Riemen oder das Gummiband können dabei Teil des Golftrolleys oder der Golftasche sein.

Vorzugsweise sind die Parallelogrammhebel an einer Halterung schwenkbar angeordnet derart, dass die Schwenkachse jeweils in kurzem Abstand seitlich und hinter dem Tragprofil verläuft. Dies hat den Vorteil, dass im zusammengefalteten Zustand die Drehachse der Hinterräder hinter dem Tragprofil verläuft.

Vorteilhaft ist der Radkasten als Aufnahmeschlitz ausgebildet. Dieser ist so gross, dass zwischen ungefähr 40 und 50% der Querschnittsfläche des Vorderrads des Golftrolleys Platz hat.

Vorteilhaft ist das Bodenteil ausgebildet, um sich an einer verlängerten Achse des Vorderrads eines dreirädrigen Golftrolleys abzustützen.

Vorteilhaft hat der Radkasten zwei einander gegenüberliegende Seitenwände, an denen auf ungefähr halber Höhe Stege angeformt sind, die miteinander fluchtende Ausnehmungen zur Aufnahme einer Vorderradachse aufweisen. Damit lässt sich die Golftasche mit dem Bodenteil an der Achse des Vorderrades einhängen und eine Formschlussverbindung herstellen. Durch die beschriebene Konstruktion kann die Lauffläche des Vorderrads mit der Standfläche des Bodenteils fluchten, sodass die Golftaschen-Golftrolley-Einheit sich mit dem Bodenteil und dem Vorderrad am Boden abstützt. Damit hat die Golftaschen-Golftrolley-Einheit selbst im zusammengefalteten Zustand ein gutes Stehvermögen und kippt nicht gleich um.

Zweckmässigerweise ist der Aufnahmeraum ausgebildet, um zwischen 30 und 70%, vorzugweise zwischen 40 und 60% und besonders bevorzugt zwischen 40 und 49% der Querschnittsfläche des Vorderrads aufzunehmen. Das bedeutet, dass das Vorderrad grösstenteils aus dem Radkasten herausragt.

Vorteilhaft hat das Bodenteil einen im Wesentlichen flachen Boden, und der Radkasten für das Vorderrad erstreckt sich ungefähr rechtwinklig zum Boden. Auf diese Weise ist noch genügend Platz für die Anordnung einer Mehrzahl von Golfschlägern vorhanden.

Gemäss einer bevorzugten Ausführungsform ist an den Radkasten für das Vorderrad anschliessend ein nach aussen offener Kanal für die Aufnahme des Tragprofils eines Golftrolleys vorgesehen. Dies hat den Vorteil, dass der Kanal für das Tragprofil im Wesentlichen in der Peripherie der Umhüllung verlaufen kann, was für Kompaktheit der kombinierten Golftaschen-Golftrolley-Einheit sorgt.

Zweckmässigerweise sind an der Unterseite des Bodenteils Standfüsse vorgesehen. Dies sorgt für einen guten Stand der kombinierten Golftaschen-Golftrolley-Einheit im zusammengefalteten Zustand. Das Bodenteil ist vorzugsweise wannenförmig mit niedrigen, umlaufenden Seitenwänden ausgebildet. Vorteilhaft ist gegenüberliegend dem Bodenteil ein Kopfteil vorgesehen, das mittels mehrer Stäbe mit dem Bodenteil verbunden ist. Dies ist eine ultraleichte Konstruktion, insbesondere wenn die Stäbe aus einem kohlefaserverstärkten Kunststoff hergestellt sind.

Vorzugsweise hat das Kopfteil Unterteilungen für die Aufnahme verschiedener Golfschläger auf, sodass diese übersichtlich angeordnet und leicht entnommen werden können.

Gemäss einem anderen Aspekt der Erfindung ist das Vorderrad des Golftrolleys fix im Radkasten der Golftasche montiert.

Gegenstand der vorliegenden Erfindung ist auch ein dreirädriger Golftrolley zur Aufnahme einer Golftasche mit einem im Golftaschenbodenteil vorgesehenen Radkasten mit
- einem länglichen, insbesondere rohrförmigen, Tragprofil,
- einem Vorderrad, das an einem ersten Ende des Tragprofils angeordnet ist,
- einer Lenkstange, die mit einem ersten Ende am zweiten Ende des Tragprofils angelenkt ist, und in einer Ebene von einer ersten Position, in welcher die Lenkstange am Tragprofil anliegt, in eine zweite Position, in welcher die Lenkstange einen stumpfen Winkel mit dem Tragprofil einnimmt, verschwenkbar ist,
- Feststellmittel, um eine einmal eingenommene Position der Lenkstange relativ zum Tragprofil zu fixieren,
- zwei Hinterräder, welche mittels zweier Parallelogrammhebel an gegenüberliegenden Seiten des Tragprofils angelenkt sind,
- zwei Streben, welche mit einem Ende jeweils mindestens an einem der Parallelogrammhebel und mit dem anderen Ende an der Lenkstange angelenkt sind, derart, dass die Hinterräder beim Verschwenken der Lenkstange von einer engen Transportstellung in eine gespreizte Fahrstellung und umgekehrt bewegbar sind. Dieser Golftrolley ist dazu ausgelegt, um mit einer Golftasche gemäss einem der Ansprüche 1 bis 18 kombiniert zu werden und weist die Besonderheit auf, dass das Vorderrad eine Achse aufweist, deren axiale Verlängerungen an einander gegenüberliegenden Seiten des Vorderrads ein Auflager für eine Golftasche bildet. Dadurch kann eine entsprechend ausgebildete Golftasche am Golftrolley eingehängt und mit diesem eine kompakte Einheit bilden. Der erfindungsgemässe Golftrolley wird im Allgemeinen gestossen, sodass in der Beschreibung das «Mittelrad» als «Vorderrad» und die beiden anderen Räder als «Hinterräder» bezeichnet sind. Dabei ist dem Leser klar, dass der Golftrolley selbstverständlich auch gezogen werden kann.

Vorteilhaft ist am Tragprofil eine Gabel mit U-förmigen Ausnehmungen vorgesehen oder ausgebildet, die der Aufnahme der Vorderradachse dienen.

Vorteilhaft überragt die Achse des Vorderrads auf beiden Seiten die Gabel um eine bestimmte Distanz.

Gemäss einer vorteilhaften Ausführungsform ist die Lenkstange über ein Verbindungsstück am Tragprofil angeordnet derart, dass die Schwenkachse sich eine bestimmte Distanz hinter dem Tragprofil befindet. Dies hat den Vorteil, dass Tragprofil und Lenkstange im zusammengeklappten Zustand des Golftrolleys im Wesentlichen parallel zueinander verlaufen können.

Vorteilhaft sind im Abstand zum zweiten Ende des Tragprofils Verbindungsmittel zur Herstellung einer form- und/oder kraftschlüssigen Verbindung mit einer Golftasche vorgesehen, damit Golftasche und Golftrolley eine zusammen transportierbare Einheit bilden können, sodass die Vorteile eines integrierten Golftaschenwagens realisiert sind.

Vorteilhaft sind die Parallelogrammhebel an einer Halterung schwenkbar angeordnet derart, dass die Schwenkachse jeweils in kurzem Abstand seitlich und hinter dem Tragprofil verläuft. Dies hat den Vorteil, dass die Hinterräder im zusammengefalteten Zustand in kurzem Abstand zum Tragprofil angeordnet sind.

Vorteilhaft ist die Hinterradeinheit um eine am Fahrgestell, insbesondere Tragprofil, vorgesehene Rotationsachse verschwenkbar. Dies erlaubt es, die Hinterradeinheit rasch in die Gebrauchsstellung zu bringen.

Zweckmässigerweise umfasst das Fahrgestell ein vorzugsweise längliches Tragprofil. Das Vorsehen eines zentralen in Längsrichtung des Golftrolleys sich erstreckenden Tragprofils hat den Vorteil, dass dies dem Golftrolley eine grosse Stabilität verleiht. Denkbar ist jedoch auch, dass anstelle eines stabförmigen Tragprofils eine Rahmenkonstruktion verwendet wird, wobei die übrige Konstruktion gleich bleiben könnte.

In einer weiteren Ausführungsform ist die Einrichtung zum Führen des Golftrolleys an einer Lenkstange angeordnet, die verschwenkbar am Tragprofil angelenkt und zusätzlich mit der Hinterradeinheit gelenkig verbunden ist. Diese Ausführungsform hat den Vorteil, dass durch Verschwenken der Lenkstange von einer Nichtgebrauchsstellung (zusammengeklappte Position), in der die Lenkstange an der Rückseite des Golftrolleys resp. an der Hinterradeinheit fast oder ganz anliegt und einer Gebrauchsstellung, in der die Lenkstange einen Winkel von bis zu 20 Grad zur Längsachse des Tragprofils einnimmt, in eine fahrbereite, auseinandergeklappte Position gebracht werden kann. Beim Aufstellen des Golftrolleys wird die Lenkstange vorzugsweise zwischen ungefähr 130 Grad und 180 Grad verschwenkt.

Vorzugsweise sind die Hinterräder mittels einer Radstütze direkt oder indirekt am Tragprofil oder Rahmen angelenkt. Dies sorgt für eine grosse Stabilität des ganzen Golftrolleys.

Vorteilhaft umfasst die Einrichtung zum Führen des Golftrolleys eine Lenkstange, wobei die Lenkstange am Tragprofil angelenkt ist. Diese Konstruktion sorgt für eine hohe Stabilität des Golftrolleys bei geringem Gewicht.

Gemäss einer besonders vorteilhaften Ausführungsform sind Lenkstange und Radstützen mittels einer Strebe mechanisch miteinander gekoppelt. Dies ergibt eine gute Abstützung der Führungseinrichtung, weil sich über die Streben Lasten direkt auf die Radstützen ableiten lassen.

Vorteilhaft umfasst die Einrichtung zum Führen des Golftrolleys einen Bügel, der an der Lenkstange drehbar montiert und somit in der Höhe verstellbar ist. Damit kann der Bügel entsprechend der Grösse eines Golfspielers auf unterschiedliche Höhen eingestellt werden.

Zweckmässigerweise ist das Vorderrad am vorderen Ende des Tragprofils frei drehbar angeordnet. Dies dient ebenfalls der Stabilität des Golftrolleys, wenn das Vorderrad direkt am Tragprofil angeordnet ist. Dazu kann das Tragprofil eine Radgabel ähnlich der Fahrradgabel eines Fahrrades aufweisen, um das Vorderrad zu montieren. Vorteilhaft verläuft die Drehachse des Vorderrads unterhalb und im Abstand zur Längsmittellinie des Tragprofils.

Vorzugsweise befinden sich die Hinterräder in der zusammengeklappten Stellung seitlich nah am Bodenteil des Behältnisses. Das Bodenteil kann zu diesem Zweck seitliche Einbuchtungen oder Nischen aufweisen, in denen die Hinterräder in der Nichtgebrauchsstellung teilweise oder vorzugsweise vollständig aufgenommen sind, sodass sie seitlich nicht über die Golftasche vorstehen, d.h. der Radstand nicht breiter als die Golftasche sind. Dies ist eine platzsparende Konstruktion und sorgt für Kompaktheit der Golftasche-Golftrolley-Einheit.

Vorteilhaft sind die Hinterräder in der Nichtgebrauchsstellung in Draufsicht auf die liegende Golftaschen-Golftrolley-Einheit wenigstens teilweise in der Aussenkontur des Bodenteils und/oder der Umhüllung aufgenommen. Je mehr die Hinterräder in der Aussenkontur der Umhüllung aufgenommen sind, umso kompakter ist die ganze Golftasche-Golftrolley-Einheit.

Vorteilhaft verbindet die Umhüllung das Bodenteil und das Kopfteil miteinander und weist eine Vorder- und eine Rückseite, sowie zwei die Vorder- und Rückseite verbindende Seitenflächen auf. Dabei kann die Umhüllung auswechselbar sein und aus unterschiedlichen Materialien wie Kunststoff, Textil, Schale etc. hergestellt sein.

Zweckmässigerweise besitzt das Bodenteil eine Abschrägung, um die Bodenfreiheit des Golftrolleys in der Gebrauchsstellung zu verbessern. Diese Abschrägung befindet sich zwischen der Rückseite und dem Boden des Bodenteils. Je nach Position des Vorderrads im Bodenteil kann die Abschrägung mehr oder weniger ausgeprägt ausfallen.

Wenn in der Nichtgebrauchsstellung die Drehachsen der Hinterräder einerseits und die Drehachse des Vorderrades andererseits voneinander beabstandet sind, dann kann der Golftrolley aufrecht stehen, ohne dass sich das Bodenteil auf der Auflageoberfläche abstützen muss. Allerdings ist genauso vorstellbar, dass in der aufrechten, zusammengeklappten Stellung des Golftrolleys sich das Behältnis am Boden abstützt. So kann der Golftrolley in der aufrechten, zusammengefalteten Position einerseits auf dem Vorderrad und/oder den Hinterrädern stehen und sich mit dem Bodenteil abstützen, sodass die Golftaschen-Golftrolley-Einheit eine stabile Position einnehmen kann.

Vorteilhaft ist die Hinterradeinheit derart am Fahrgestell angelenkt, dass beim Verschwenken derselben von der Nichtgebrauchsstellung in die Gebrauchs- oder Fahrstellung die Radstützen gespreitzt werden. Dies hat den grossen Vorteil, dass sich damit die Standfestigkeit der Golftaschen-Golftrolley-Einheit verbessert und ein seitliches Kippen auch im hügeligen Gelände kaum möglich ist. Zweckmässigerweise können die Hinterräder relativ zur Grundstellung (Nichtgebrauchsstellung) auf ungefähr die doppelte Breit gespreizt werden.

Vorteilhaft stützen in der Fahrstellung die Hinterräder und das Vorderrad das Fahrgestell und den Behälter in einer schrägen Stellung, in der die Radstützen vorzugsweise ungefähr in einem rechten Winkel zum Träger angeordnet sind.

Zweckmässigerweise sind im Kopfteil eine Mehrzahl von Öffnungen zum Einstecken der Golfschlägerschafte ausgebildet, sodass die gewünschte Anzahl von Golfschlägern mitgeführt werden können. Damit die Golfschläger einfach dem Behältnis entnommen werden können und ein optisch aufgeräumtes Bild entsteht, sind die Golfschlägerköpfe im Kopfteil vorzugsweise positioniert aufgenommen. Dazu können im Kopfteil eine Mehrzahl von Öffnungen vorgesehen sein. Damit die Golfschläger innerhalb des Behältnisses geführt sind, können sich an der Unterseite des Kopfteils vorzugsweise einzelne Röhren anschliessen, die sich bis zum Bodenteil erstrecken können.

Vorzugsweise ist ein Bügel vorgesehen, der am hinteren (distalen) Ende der Lenkstange angelenkt und in verschiedenen Positionen feststellbar ist. Dies hat den Vorteil, dass der Bügel auf die Grösse eines Benutzers des Golftrolleys einstellbar ist.

In einer weiteren Ausführungsform ist an der Lenkstange ein Handgriff in Längsrichtung beweglich angeordnet, der mit einem Bolzen mechanisch verbunden ist. Dadurch lässt sich die Lenkstange entriegeln, indem der Handgriff so weit zurückgezogen wird, dass der Bolzen aus der Verrastung gelangt. Vorteilhaft ist der Bolzen mittels eines Federelements in eine Arretierposition vorgespannt. Dies hat den Vorteil, dass der Bolzen selbsttätig einrasten kann, wenn die Lenkstange verschwenkt und der Handgriff losgelassen wird.

Zweckmässigerweise ist ein Schnappmechanismus zur Verrastung der Lenkstange in der Nichtgebrauchsstellung vorgesehen. Damit kann die Betätigungsstangen in der Gebrauchs- wie auch in der Nichtgebrauchsstellung lösbar fixiert sein.

Ein Ausführungsbeispiel der Erfindung wird nun unter Bezugnahme auf die nachfolgenden Figuren näher im Detail beschrieben. Es zeigt:
- Figur 1:: Eine Seitenansicht einer erfindungsgemässen, mit Golfschlägern bestückten Golftasche verbunden mit einem Golftrolley in der Fahrstellung, wobei der Golftrolley eine bewegliche Hinterradeinheit und ein stationäres Vorderrad und eine Einrichtung zum Auseinander- und Zusammenklappen sowie Führen der aus Golftasche und Golftrolley kombinierten Golftaschen-Golftrolley-Einheit mit einer Lenkstange und einem an dieser angelenkten, höhenverstellbaren Bügel (ohne Umhüllung zwecks verbesserter Anschaulichkeit) ;
- Figur 2:: Golftasche und Golftrolley von Fig. 1 in Draufsicht;
- Figur 3:: Golftasche und Golftrolley von Fig. 1 in aufrechter Stellung und im zusammengeklappten Zustand;
- Figur 4:: Eine Unteransicht des zusammengeklappten Golftrolleys;
- Figur 5:: Eine Seitenansicht des zusammengeklappten Golftrolleys;
- Figur 6:: Eine Draufsicht auf den zusammengeklappten Golftrolley;
- Figur 7:: Eine Stirnansicht des zusammengeklappten Golfttrolleys;
- Figur 8:: Einen Schnitt durch den zusammengeklappten Golfttrolley entlang der Linie A-A von Fig. 5;
- Figur 9:: Das komplette, tragende Fahrgestell des Golftrolleys ohne Boden- und Kopfteil und in zusammengeklapptem Zustand;
- Figur 10:: Das ganze Fahrgestell des Golfttrolleys von Fig. 9 mit einem Tragprofil und einer am Tragprofil angeordneten Aufrichteinheit bestehend aus der Hinterradeinheit und einer daran angeordneten Lenkstange und einem Bügel zum Stossen der Golftaschen-Golftrolly-Einheit;
- Figur 11:: Die Anlenkung der Lenkstange an das Tragprofil in der Gebrauchsstellung;
- Figur 12:: Die Stellung der Lenkstange in der Nichtgebrauchsstellung;
- Figur 13:: In vergrössertem Massstab die Gelenkverbindung zwischen dem Tragprofil und der Lenkstange in der Gebrauchsstellung; und
- Figur 14:: In vergrössertem Massstab die Gelenkverbindung zwischen dem Tragprofil und der Lenkstange in der Nichtgebrauchsstellung; .
- Figur 15:: Perspektivische Ansicht des Gerüsts der Golftasche bestehend aus einem Bodenteil und einem Kopfteil, die mittels Stäben miteinander verbunden sind, von schräg hinten;
- Figur 16:: Eine Hinteransicht des Golftaschengerüsts;
- Figur 17:: Eine Seitenansicht des Golftaschengerüsts;
- Figur 18:: Eine Draufsicht auf das Golftaschengerüst;
- Figur 19:: Einen Schnitt durch das Golftaschengerüst entlang der Linie D-D von Fig. 16;
- Figur 20:: Einen Schnitt durch das Gerüst der Golftasche entlang der Schnittlinie E-E;
- Figur 21a:: Eine perspektivische Ansicht des Bodenteils der Golftasche mit Radkasten und des Vorderrads eines Golftrolleys, der Achsverlängerungen für die Aufnahme der Golftasche aufweist;
- Figur 21b:: Eine Draufsicht auf das Bodenteil, wobei in strichlierten Linien die Positionen der einzelnen Golfschläger angegeben ist;
- Figur 22:: Eine perspektivische Ansicht der erfindungsgemässen Golftasche;
- Figur 23:: Eine perspektivische Ansicht der erfindungsgemässen Golftasche-Golftrolley-Einheit von schräg hinten;
- Figur 24:: Eine perspektivische Ansicht der Golftaschen-Golftrolley-Einheit;
- Figur 25:: Die Golftaschen-Golftrolley-Einheit von Fig. 24 mit Golfschlägern bestückt;
- Figur 26:: Eine Seitenansicht der zusammengeklappten Golftaschen-Golftrolley-Einheit von Fig. 25, jedoch ohne Umhüllung;
- Figur 27:: eine Vorderansicht der Golftaschen-Golftrolley-Einheit von Fig. 26;
- Figur 28:: Eine perspektivische Ansicht der Golftaschen-Golftrolley-Einheit von Fig. 25 in der Fahrposition; und
- Figur 29:: Eine perspektivische Ansicht nur des Golftrolleys in der auseinandergeklappten Position;
- Figur 30:: Der Golftrolley in einer Explosionsdarstellung;
- Figur 31:: Eine Seitenansicht des Golftrolleys mit Golftasche;
- Figur 32:: Die Verbindung des Kopfteils des Golftrolleys (ohne Umhüllung) mit dem Rahmen des Golftrolleys mittels eines Drehknopfs und einer Spannmutter;
- Figur 33:: Wie Fig. 32, jedoch unter Weglassung der Spannmutter;
- Figur 34:: Eine Seitenansicht der Golftasche (ohne Umhüllung) und des Golftrolleys; und
- Figur 35:: Einen Schnitt durch den Drehknopf entlang der Linie A-A von Fig. 34.

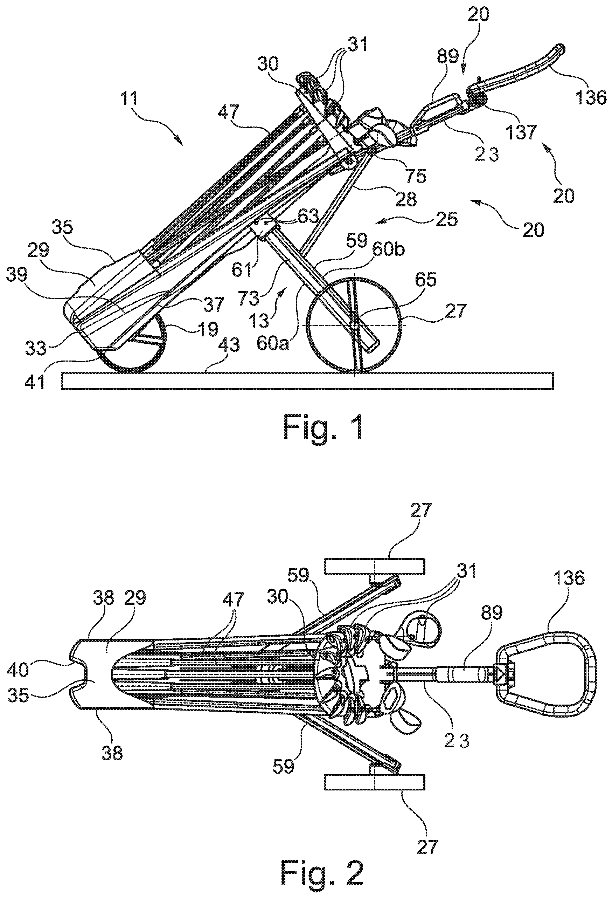

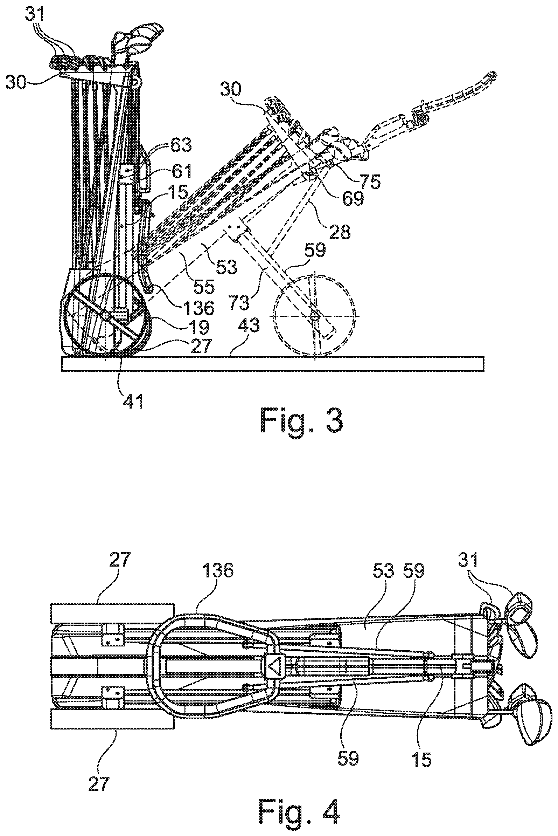

Die in den Figuren 1 bis 10 gezeigte erste Ausführungsform eines Golftrolleys 11 umfasst ein Fahrgestell 13 mit einem länglichen Tragprofil 15, einem am vorderen Ende 17 des Tragprofils 15 fix angeordneten, nicht verstellbaren Vorderrad 19 und einer Aufrichteinheit 20 mit einer am hinteren Ende 21 des Tragprofils angelenkten Lenkstange 23 und einer zwischen dem vorderen und dem hinteren Ende 17, 21 angeordneten Hinterradeinheit 25 mit zwei Hinterrädern 27 und zwei Streben 28. Auf dem Golftrolley 11 ist eine Golftasche 53 lösbar befestigt. Die Golftasche 53 hat ein Bodenteil 29 und gegenüberliegend ein Kopfteil 30, die über ein nachfolgend noch näher zu beschreibendes Gerüst miteinander verbunden sind. Nachfolgend werden diese Komponenten und deren Zusammenwirken näher erläutert.

Im Bodenteil 29 sind bei bestückter Golftasche die Griffenden von Golfschlägern 31, im Golfjargon auch als «Eisen» bezeichnet, aufgenommen. Das Bodenteil 29 ist Teil der Golftasche und umfasst einen Boden 33, eine Vorder- 35 und eine Rückseite 37 und zwei Seitenflächen 39, welche die Vorder- und Rückseiten 35,37 miteinander verbinden (Fig. 1). Dabei erstrecken sich die Vorder- und Rückseiten 35, 37, sowie die zwei Seitenflächen 39 im Wesentlichen rechtwinklig zum Boden 33 und bilden einen umlaufenden, nach oben abstehenden Kragen, der eine Höhe zwischen 5 und 10 cm relativ zum Boden 33 hat. In der Mitte des Bodenteils 29 ist ein schlitzförmiger, nach hinten und unten offener Radkasten 40 vorgesehen, in der etwas weniger als die Hälfte der Querschnittsfläche des Vorderrads 19 Platz hat (Figuren 1 und 2). Radkasten 40 und Durchmesser des Vorderrads 19 sind so aufeinander abgestimmt, dass die Lauffläche des Vorderrads in etwa mit der Unterseite des Bodenteils 29 fluchtet. Zwischen der Rückseite 37 und dem Boden 33 des Bodenteils 29 ist eine Abschrägung 41 ausgebildet, damit in der Fahrstellung des Golfttrolleys ausreichend Bodenfreiheit zwischen dem Bodenteil 29 und der Auflageoberfläche 43 resp. Fahrbahn vorhanden ist. Das Vorsehen einer Abschrägung 41 ist dann erforderlich, wenn die Radachse in kurzem Abstand von der Rückseite 37 innerhalb des Bodenteils 29 vorgesehen ist.

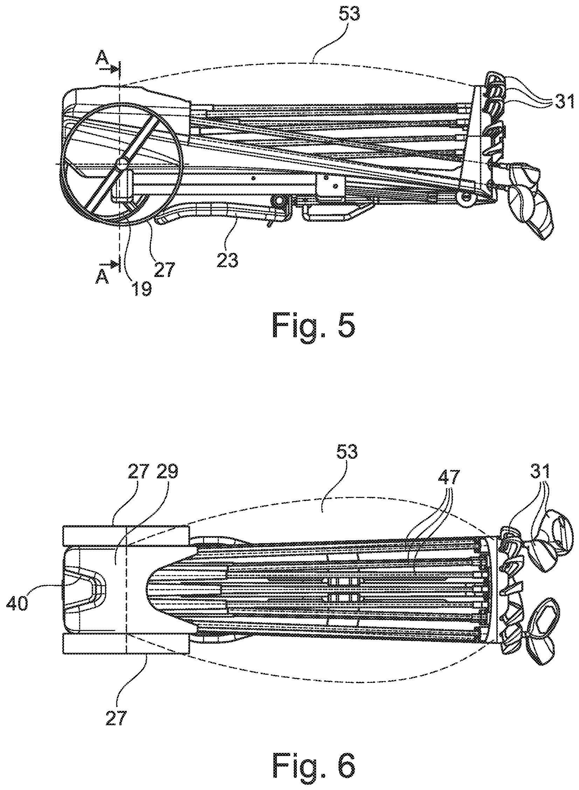

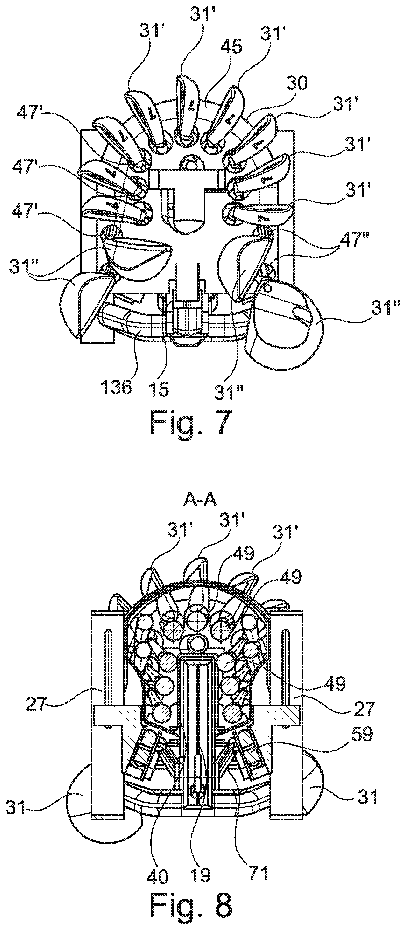

Das Kopfteil 30 der Golftasche 53 ist am Tragprofil 15 lösbar angeordnet und besteht im Wesentlichen aus einem ungefähr kreis-, halbkreis- oder U-förmigen Formteil 45, in welchem einzelne, vorzugsweise kreisrunde oder rechteckige Öffnungen 47 zum Einstecken der Golfschlägerschafte 49 vorgesehen sind (Fig. 7 und 8). Anstatt eines Formteils 45 kann jedoch auch ein kreis-, halbkreis- oder U-förmiger Rahmen, vorzugsweise aus einem formstabilen Kunststoff, vorgesehen sein. An den Boden- und Kopfteilen 29,30 ist eine in den Figuren 5 und 6 strichliert eingezeichnete Umhüllung angeordnet, die zusammen mit den Boden- und Kopfteilen 29,30 ein Behältnis für die Golfschläger 31 definiert. Die Umhüllung, vorteilhaft aus textilem Material, ist vorzugsweise mittels Nieten, Druckknöpfen, eines Klettverschlusses, Klemmelementen oder dergleichen lösbar mit den Boden- und Kopfteilen 29,30 verbunden. Dies hat den Vorteil, dass die Umhüllung im Falle einer Beschädigung ersetzt werden kann, oder wenn das Erscheinungsbild der Golftasche aus modischen Gründen verändert werden soll.

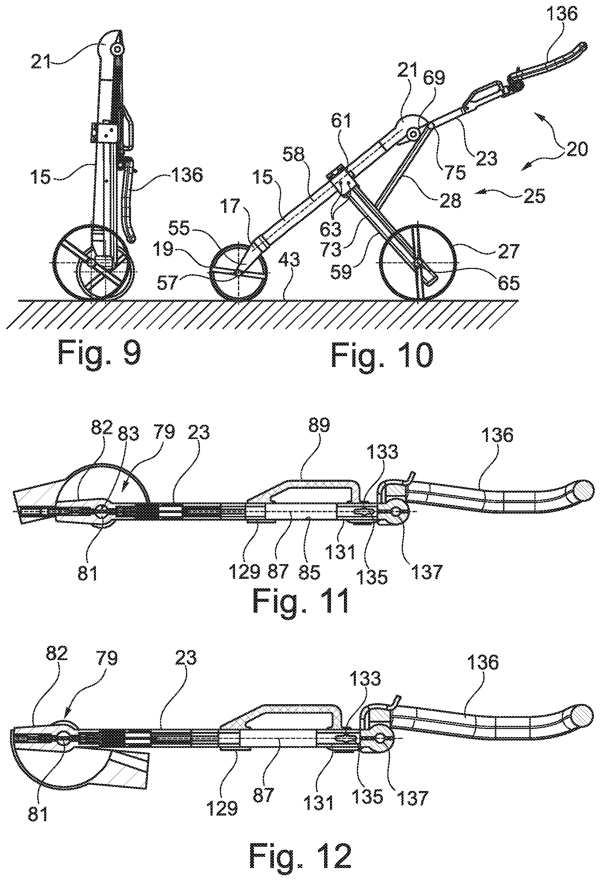

Das stabförmige Tragprofil 15 des Golftrolleys hat am vorderen Ende 17 einen in der Gebrauchsstellung nach unten abgewinkelten Fortsatz 55, an dem das Vorderrad 19 angelenkt und um eine Drehachse 57 drehbar ist (Fig. 10). Durch die Abwinkelung des Tragprofils 15 nach unten befindet sich die Drehachse 57 des Vorderrads 19 im Abstand von einer durch das Tragprofil gehenden Längsmittellinie 58 (Fig. 10). Dadurch kann die Aussparung 41 im Bodenteil 29 etwas kleiner ausfallen, weil das Vorderrad weniger stark ins Behältnis eintaucht und somit insgesamt mehr Platz zum Verstauen der Golfschläger vorhanden ist.

Die Hinterradeinheit 13 des Golftrolleys umfasst zwei separate Radaufhängungen, an denen die beiden Hinterräder 27 frei drehbar angeordnet sind. Die Radaufhängungen umfassen jeweils eine Radstütze 59, welche mittels eines Gelenks 61 mit dem Tragprofil 15 verbunden und um eine Schwenkachse 63 verschwenkbar ist. Das Gelenk 61 für die Anlenkung der Radstützen 59 befindet sich in Längsrichtung des Golfttrolleys gesehen eine bestimmte Distanz, vorzugsweise zwischen 5 und 20 cm und besonders bevorzugt zwischen 8cm und 14cm oberhalb der Mitte des Tragprofils 15. Am anderen Ende der Radstütze 59 ist das Hinterrad 27 um eine Drehachse 65 frei drehbar angeordnet. Die Radstütze 59 umfasst zwei einzelne und voneinander beabstandete Parallelogrammhebel 60a,60b, die um die Schwenkachsen 63 verschwenkbar sind. Dadurch, dass die beiden Parallelogrammhebel 60a,60b an unterschiedlichen Punkten angelenkt sind, werden die Räder beim Aufklappen relativ zueinander parallel vom Tragprofil weggeschwenkt, sodass diese auch in Gebrauchsstellung parallel zueinander sind.

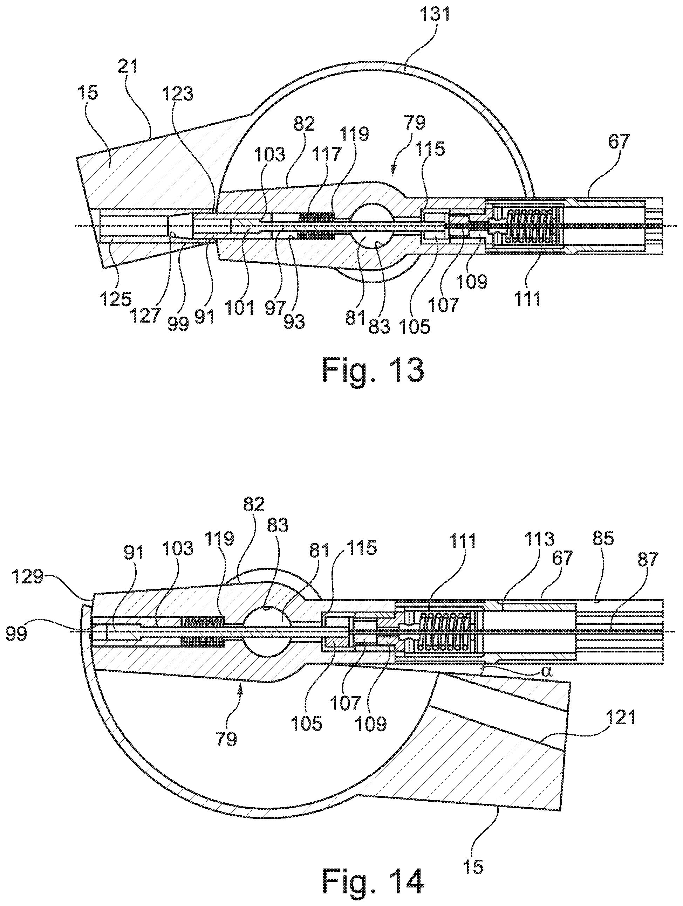

Die Lenkstange 23 zum Auseinander- oder Zusammenfalten des Golftrolleys ist am ersten, hinteren Ende des Tragprofils 15 angelenkt und um eine Schwenkachse 69 verschwenkbar. Die Streben 28 sorgen über die Drehpunkte 73 und 75 für eine gelenkige Verbindung zwischen der Lenkstange 23 und den Radstützen 59. Wird die Lenkstange 23 verschwenkt, dann werden zwangsgeführt auch die Radstützen 59 verschwenkt. In der einen durch die Nichtgebrauchsstellung definierten Extremposition der Aufrichteinheit erstrecken sich die Radstützen 59, die Lenkstange 23 und die Streben 28 im Wesentlichen parallel oder in einem kleinen Winkel (bis max. ungefähr 5 Grad) zum Tragprofil 15. In der anderen durch die Gebrauchsstellung definierten Extremposition beschreiben die Radstützen 59 ungefähr einen rechten Winkel zum Tragprofil 15, und die Lenkstange 23 erstreckt sich in einem Winkel α von ungefähr 15 Grad zum Tragprofil 15 (Fig.14). In dieser Stellung nimmt das Tragprofil 15 und die auf dem Tragprofil 15 angeordnete Golftasche 53 einen Winkel zwischen ungefähr 40 und 50 Grad zur Fahrbahnfläche 43 ein.

Die Figuren 7 und 8 zeigen die Anordnung der Golfschläger 31 in der Golftasche 53 näher im Detail. Für die Golfschläger 31 mit einer normalen Schaftlänge sind insgesamt neun Löcher 47' im Formteil 45 vorgesehen, die in einem «U» gruppiert sind. Vier weitere Löcher 47" sind unterhalb der erwähnten neun Löcher 47' näher am äusseren Rand des Formteils 45 vorgesehen. Diese Löcher 47" sind für überlange Golfschläger reserviert.

An die Löcher 47' und 47" können sich an der Unterseite des Formteils 45 Röhren aus Kunststoff oder einem textilen Material anschliessen, in denen die Golfschlägerschafte 49 geführt resp. aufgenommen sind. Diese Röhren sind aus Darstellungs- und Übersichtlichkeitsgründen in der Fig. 8 jedoch nicht eingezeichnet. Wie aus den Figuren 1, 5 und 8 ersichtlich ist, erstrecken sich die Schafte der drei oberen Golfschläger 31' im Wesentlichen parallel zur Längsmittellinie 58 (Fig. 10) des Tragprofils 15, die anderen sechs Golfschläger 31' der U-förmigen Anordnung sind hingegen zur Mitte hin geneigt, sodass diese im Behältnis im Zwischenraum zwischen dem für das Vorderrad 19 vorgesehenen Radkasten 40 und den Hinterrädern 27 zu liegen kommen. Die Schafte 49 der überlangen Golfschläger 31" hingegen nutzen den verbleibenden Raum zwischen der nicht gezeigten Umhüllung und den insgesamt sechs seitlich angeordneten Golfschlägern 31' und erstrecken sich im Behältnis 53 von oben hinten schräg nach unten vorne, wenn die Golftaschen-Golftrolley-Einheit senkrecht steht. Durch diese schräge Anordnung der Golfschläger lassen sich bis zu ca. zusätzliche 5cm Schaftlänge innerhalb des Behältnisses unterbringen. Die Begriffe «oben» und «hinten» beziehen sich auf die Gebrauchsstellung und Fahrtrichtung der Golftaschen-Golftrolley-Einheit und sind nicht als limitierende Merkmale zu verstehen. Hinten ist bei der Golftasche dort, wo das Vorderrad des Golftrolleys aus dem Bodenteil ragt.

In den Figuren 11 bis 14 ist der Arretiermechanismus für die Lenkstange 23 gezeigt. Der Arretiermechanismus sorgt für eine sichere Fixierung der Lenkstange 23 im ausgeklappten Zustand des Golfttrolleys und zwar in einem Winkel zwischen ungefähr 10 und 30 Grad zum Tragprofil 15. Das Besondere am erfindungsgemässen Golfttrolley ist, dass dieser sich mit einem einzigen Handgriff resp. einer einzigen Bewegung vom zusammengeklappten (Nichtgebrauchsstellung) in den auseinandergeklappten Zustand (Gebrauchsstellung) überführen lässt. Dies im Unterschied zu den eingangs erwähnten integrierten Golftaschenwagen, wo jeweils mehrere Handgriffe nötig sind, um diese aufzurichten. Um das Aufstellen des Golftrolleys möglichst einfach zu gestalten, ist am hinteren Ende 21 des Tragprofils 15 ein Drehgelenk 79 ausgebildet. Das Drehgelenk 79 weist am Tragprofil 15 einen Gelenkzapfen 81 auf. Auf den Zapfen 81 aufgesetzt ist die Lenkstange 23, die zu diesem Zweck ein etwas dickeres Anschlussstück 82 mit einer Bohrung 83 aufweist. Die Lenkstange 23 ist rohrförmig ausgebildet mit einem Kanal 85. In diesem Kanal 85 erstreckt sich ein Seilzug 87, der eine mechanischeVerbindung zwischen einem an der Lenkstange 23 verschieblich gelagerten Handgriff 89 und einem beweglichen Arretierbolzen 91 herstellt, welcher in einem stirnseitigen Sackloch 93 der Lenkstange 23 aufgenommen ist.

Der Arretierbolzen 91 ist mittels eines Verbindungsstabs 97 mit dem Seilzug 87 verbunden, wobei der Arretierbolzen 91 und der Verbindungsstab 97 relativ zueinander beweglich ausgebildet sind. Zu diesem Zweck weist der Arretierbolzen 91 eine abgestufte Bohrung 99 und der Verbindungsstab 97 an einem ersten Ende ein verbreitertes Kopfteil 101 auf, das in der Bohrung 99 verschieblich aufgenommen ist. Wird der Verbindungsstab 97 auf Zug beansprucht, dann liegt das Kopfteil 101 am Ringabsatz 103 des Arretierbolzens 91 an und der Arretierbolzen 91 kann in der Bohrung 93 aus der vorgeschobenen Arretierstellung, in welcher der Arretierbolzen 91 aus dem stirnseitigen Ende 82 der Lenkstange 23 herausragt, zurückgezogen werden (Fig. 13).

Am zweiten Ende des Verbindungsstabs 97 ist ein Anschlagteil 105 aufgesetzt, das mit einem Endstück 107 verbunden ist. An diesem Endstück 107 ist ein Ende des Seilzugs 87 festgemacht. Mittels eines Verbindungsteils 109 ist das Endstück 107 mit einer Druckfeder 111 verbunden. Die Druckfeder 111 selbst ist durch eine Klemmhülse 113 in ihrer Lage in der Lenkstange 23 fixiert und spannt den Verbindungsstab 97 in die in den Figuren 13 und 14 gezeigte Anschlagsposition vor, in welcher das Anschlagteil 105 an einen Absatz 115 anliegt.

Zusätzlich ist der Arretierbolzen 91 durch eine separate Feder 117 vorgespannt, die in den Zwischenraum zwischen dem Arretierbolzen 91 und dem Bohrlochgrund 119 eingesetzt ist. Dabei hat die Feder 117 die Funktion, den Arretierbolzen 91 unabhängig von der Verbindungsstange 97 in eine vorgeschobene Arretierstellung vorzuspannen, in welcher dessen vorderes Ende stirnseitig aus dem Anschlussstück 82 herausragt.

Die Lenkstange 23 kann die in den Figuren 13 und 14 gezeigten Extrempositionen einnehmen. Im zusammengeklappten Zustand des Golfttrolleys, welcher der Nichtgebrauchsstellung entspricht, nimmt die Lenkstange 23 einen Winkel α zwischen 1 und 10 Grad und in der aufgeklappten Position, welcher der Gebrauchsstellung entspricht, einen Winkel zwischen 160 und 180 Grad bezüglich des Tragprofils 15 ein. Dabei kann der Arretierbolzen 91 in der Gebrauchsstellung des Golfttrolleys in eine Bohrung 121 im Tragprofil 15 eingreifen. Um einen festen Sitz des Arretierbolzens 91 zu gewährleisten, ist dessen vorderes Ende als Konus 123 ausgebildet, und in der Bohrung 121 ist eine Hülse 125 mit einer konusförmigen Öffnung 127 vorgesehen, in welcher der Konus formschlüssig eingreifen kann (die Hülse 125 ist nur in der Fig. 13 eingezeichnet).

Wird der Arretierbolzen 91 aus seiner Verankerung in der Bohrung 121 gelöst, indem der Seilzug 87 durch Zurückziehen des Handgriffs 89 entgegen der durch die Feder 111 ausgeübten Federkraft betätigt wird, kann die Lenkstange 23 im Uhrzeigersinn gedreht werden (Fig. 13). Dabei rotiert das Anschlussstück 82 beim Auseinanderklappen des Golftrolleys um den Gelenkzapfen 81 und mit seiner gekrümmten Stirnseite 129 entlang einer halbkreisförmigen Mantelfläche 131, die am Tragprofil 15 vorgesehen oder angeformt ist. Spätestens in der zusammengeklappten Position kann der Handgriff 89 dann wieder losgelassen werden. Dann schnappt der ebenfalls unter Federspannung stehende Arretierbolzen 91 in die Bohrung 121 ein.

An den Handgriff 89 sind zwei rohrförmige Führungsbschnitte 129 und 131 angeformt, die die Lenkstange 23 formschlüssig umgreifen, wobei einer der beiden Führungsabschnitte, im vorliegenden Ausführungsbeispiel der Führungsabschnitt 131, mit dem Seilzug 87 verbunden ist (Fig. 119. Die Verbindung zwischen dem Seilzug 87 und dem Führungsabschnitt geschieht über einen Stift 133, der zwei in Längsrichtung des Lenkstange ausgerichtete Langlöcher 135 durchgreift. Die Länge der Langlöcher 135 begrenzt dabei den Hub des Handgriffs 89.

Ein Bügel 136 ist an das hintere Ende der Lenkstange 23 angelenkt und um eine Drehachse 137 verstell- und vorzugsweise in beliebigen Positionen feststellbar. Damit hat der Golfspieler die Möglichkeit, den Bügel 136 auf jene Höhe einzustellen, die seiner Grösse entspricht und ihm am komfortabelsten ist. Gemäss einer vorteilhaften Ausführungsform der Erfindung steht der Griff 89 auch mit dem Arretiermechanismus zur Feststellung einer einmal eingenommenen Schwenklage des Bügels 136 relativ zur Lenkstange 57 dergestalt in Verbindung, dass beim Zurückziehen des Griffs 89 auch die Arretierung des Arretiermechanismus gelöst ist und der vorzugsweise unter einer Federvorspannung stehende Bügel in eine Endposition verschwenkt wird, in welcher der Bügel ungefähr parallel zur Lenkstange verläuft (Fig. 1). Da dem Fachmann viele Lösungen bekannt sind, wie die Verstellbarkeit des Bügels und der Arretiermechanismus realisiert werden kann, wird auf eine nähere Beschreibung derselben verzichtet.

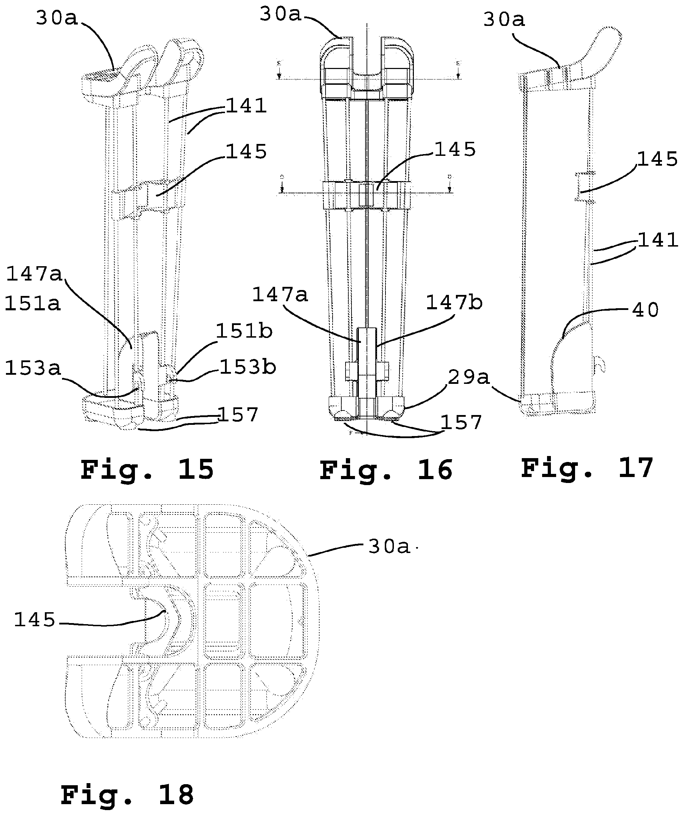

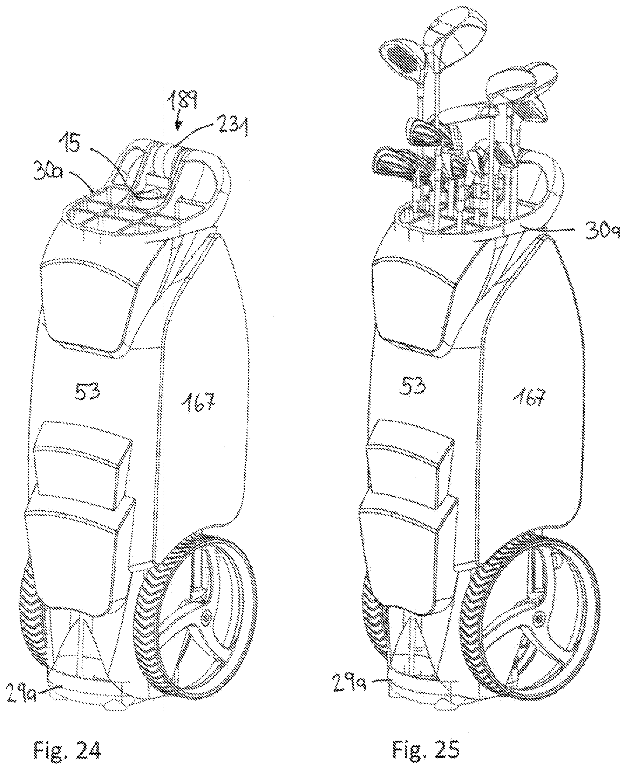

In den Figuren 15 bis 29 ist eine zweite Ausführungsform der erfindungsgemässen Golftasche 53 näher im Detail gezeigt. Die Golftasche 53 umfasst ein Bodenteil 29a mit dem Radkasten 40 und ein Kopfteil 30a. Bodenteil 29a und Kopfteil 30a sind mittels mehrerer Stäbe 141 miteinander verbunden und bilden so ein Gerüst für die Golftasche 53. Da das Bodenteil 29a flächenmässig kleiner als das Kopfteil 30a ist, laufen die Stäbe von unten nach oben relativ zueinander etwas auseinander.

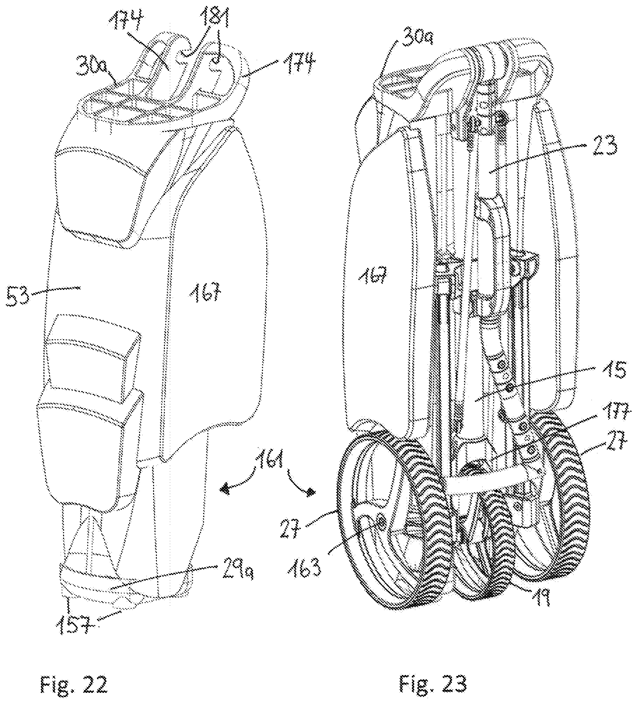

Das Golftaschengerüst kann mit einer Umhüllung 51 aus einem textilen Material eingefasst sein und so ein Behältnis für die Aufnahme der Golfschläger und weiterer Utensilien, die für die Ausübung des Golfsports benötigt werden, bilden (Fig. 22 bis 25). Denkbar ist jedoch auch, dass die Golftasche eine Hartschale ähnlich einem Reisekoffer aufweist. In diesem Fall braucht es keine Stäbe 141.

Auf ungefähr halber Höhe sind die hinteren beiden Stäbe 141, welche die Position der Rückwand resp. des Bodens der Golftasche definieren, mittels einer Klammer 143 miteinander verbunden. Diese Klammer 143 weist von oben gesehen eine ungefähr kreisrunde Einbuchtung 145 auf, die der Aufnahme des Tragprofils 15 im zusammengeklappten Zustand der Golftasche-Golftrolley-Einheit dient. Dadurch kann die Golftasche-Golftrolley-Einheit sehr kompakt gebaut sein. Denkbar ist, an den Radkasten 40 anschliessend einen vorzugsweise formstabilen Kanal aus Kunststoff vorzusehen, der sich vom Radkasten 40 bis zum Kopfteil 30 erstreckt und der mindestens teilweise Aufnahme des Tragprofils 15 dient. Dies ist jedoch nicht zwingend. Es genügt im Regelfall, wenn das Kopfteil eine Ausnehmung für die Aufnahme des Tragprofils aufweist, um eine sehr kompakte Golftasche-Golftrolley-Einheit zu generieren.

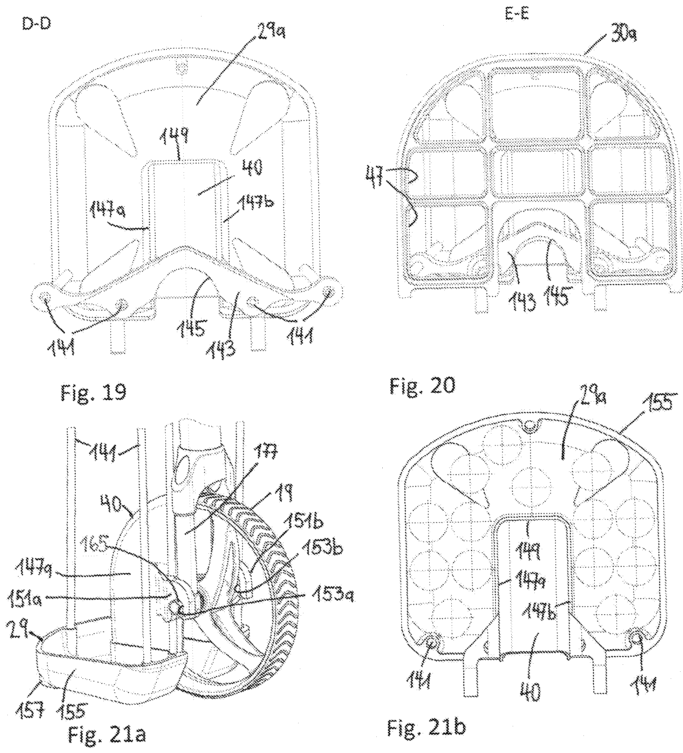

Der Radkasten 40 ist vorzugsweise integral mit dem Bodenteil 29 und besitzt zwei einander gegenüberliegende Seitenwände 147a, 147b, die golftaschenraumseitig durch eine Verbindungswand 149 miteinander verbunden sind. Auf ungefähr halber Höhe der Seitenwände 147a, 147b sind seitliche Ohren oder Stege 151a, 151b mit U-förmigen Ausnehmungen 153a, 153b angeformt. Die nach unten offenen Ausnehmungen 153a, 153b dienen der Aufnahme von Verlängerungen 165 der Radachse 163 (Fig. 21).

Das Bodenteil 29a hat einen umlaufenden und nach oben abstehenden Rand 155, der eine seitliche Begrenzung für die Golfschlägergriffe darstellt. An der Unterseite des Bodenteils 29a sind Standfüsse 157 vorgesehen, die eine Standfläche für die Golftasche bilden.

Auf beiden Seiten des Radkastens 40 ist die Golftasche schmäler als der daran anschliessende obere Teil der Tasche ausgebildet (Einbuchtungen 161), damit im zusammengeklappten Zustand des Golftrolleys die Hinterräder 27 im Wesentlichen in der Peripherie der Golftasche 53 aufgenommen sind (Fig. 22 und 23). Damit lässt sich die Golftasche-Golftrolley-Einheit für Transportzwecke im Wesentlichen auf die Grösse einer herkömmlichen Golftasche reduzieren, wenn die Hinterräder in den seitlichen Einbuchtungen 161 der Golftasche geparkt werden können. Wie aus den Fig. 23 bis 25 ersichtlich ist, stehen die Hinterräder 27 seitlich gegenüber dem darüberliegenden Behältnis nicht vor.

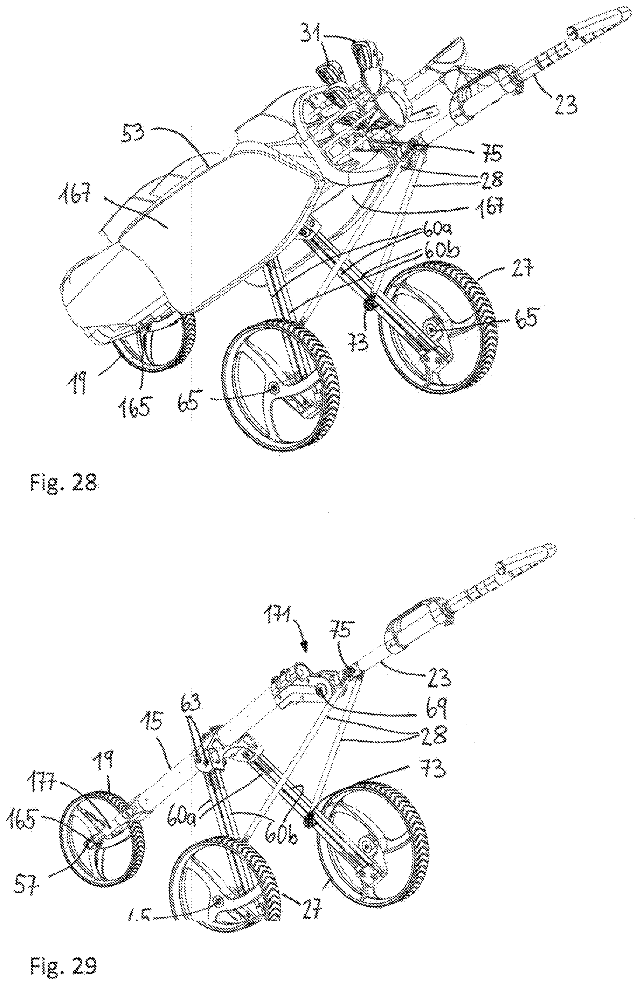

Das Vorderrad 19 des Golftrolleys besitzt eine Radachse 163, die auf beiden Seiten axial nach aussen abstehende Verlängerungen oder Überstände 165 aufweist. Auf diesen Überständen 165 kann sich die Golftasche abstützen, wenn die nach unten orientierten Ausnehmungen 153a, 153b der Stege 151a, 151b an den Verlängerungen 165 eingehängt werden und dann formschlüssig gehalten sind (Fig. 29).

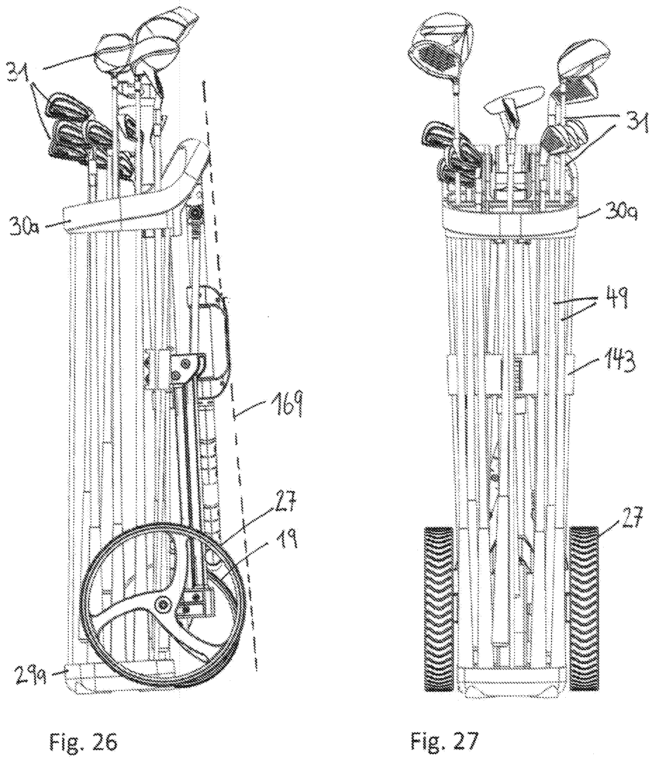

Die Golftasche 53 kann oberhalb des Radkastens Seitenteile 167 aus einem etwas festeren, insbesondere formstabilen Material aufweisen, die so weit nach hinten abstehen, dass der Golftrolley von der Seite gesehen innerhalb der Peripherie der Seitenteile 165 aufgenommen ist. Zusammen mit dem Kopfteil und den Hinterrädern können diese die Auflagefläche für die Golftasche-Golftrolley-Einheit beim Transport bilden (strichlierte Linie 169 in Fig. 26, die die mögliche Auflagefläche der Golftasche kennzeichnet).

Die Figuren 28 und 29 zeigen eine dritte Ausführungsform eines Golftrolleys, die sich durch Einfachheit, Kompaktheit und Leichtigkeit auszeichnet. Die Lenkstange 23 ist über ein abgewinkeltes Verbindungsstück 171 derart am Tragprofil 15 angelenkt, dass die senkrecht zur Längsmittelebene des Golftrolleys verlaufende Drehachse 79 beabstandet vom Tragprofil 15 ist. Dies hat den Vorteil, dass die Lenkstange 191 im zusammengeklappten Zustand des Golftrolleys im Wesentlichen parallel zum Tragprofil 15 verlaufen kann. Konkret steht das Verbindungsstück 171 in einem Winkel zwischen ungefähr 40 und 60 Grad von der Längsachse des Tragprofils 15 ab, und am Ende des Verbindungsstücks 171 ist die Lenkstange 191 angelenkt und um die Schwenkachse 69 verschwenkbar.

Das Kopfteil 30a besitzt hinten eine von oben gesehen U-förmige Ausnehmung 172, deren Schenkel 174 in einem Winkel zwischen ungefähr 40 und 60 Grad nach oben abstehen. In der Ausnehmung 172 sind das zweite Ende des Tragprofils 15, an dem das Verbindungsstück 171 angeordnet ist, aufgenommen, wenn Golftasche 53 und Golftrolley vereinigt sind. In den Schenkeln 174 können U-förmige Ausnehmungen 181 vorgesehen sein (Fig. 22), mit denen das Kopfteil 30a am Golftrolley formschlüssig befestigt werden kann, wenn beispielsweise am Verbindungsstück 171 seitlich nach aussen ragende Stifte, z.B. als Verlängerung der Schwenkachse 69, vorgesehen sind (in den Figuren nicht gezeigt). Wenn die Golftasche am Golftrolley eingehängt ist, sind die vom Verbindungsstück seitlich in entgegengesetzte Richtungen abstehenden Stifte in den Ausnehmungen 174 aufgenommen.

Zur lösbaren Verbindung von Golftrolley und Golftasche können zusätzlich noch weitere Verbindungsmittel, z.B. Riemen, eine Schnappverbindung oder dergleichen, vorgesehen sein, damit sich die Golftasche-Golftrolley-Einheit mit einer Hand tragen lässt.

Die Parallelogrammhebel 60a, 60b sind über eine Halterung 173 derart am Tragprofil 15 angeordnet, dass deren Drehachse 63 im seitlichen Abstand vom Tragprofil 15 verläuft. Zudem befindet sich die Drehachse 63 räumlich hinter dem Tragprofil 15, sodass die Drehachsen des Vorderrads 19 und der Hinterräder im zusammengeklappten Zustand und in Fahrtrichtung gesehen vorzugsweise etwas voneinander beabstandet sind. Dadurch kann der Golftrolley auch ohne Golftasche frei senkrecht stehen, da die Räder eine Dreipunktauflage bilden.

Die Parallelogrammhebel 60a,60b erstrecken sich im zusammengeklappten Zustand vorzugsweise parallel und im kurzen Abstand zum Tragprofil 15 und im gespreizten Zustand in einem Winkel zwischen 30 und 60 Grad zur senkrechten Längsmittelebene des Golftrolleys.

Das Vorderrad 19 ist an einer Radgabel 177 am Tragprofil 15 angeordnet, deren Gabelbeine 179 koaxial zum Tragprofil 15 verlaufen. In den Stirnseiten der Gabelbeine 179 sind U-förmige Ausnehmungen oder Lager 180 für die Aufnahme der Radachse 163 vorgesehen. Die Gabelbeine 179 der Radgabel 177 sind über einen Gabelkopf 183 am Tragprofil 15 angeordnet. Der Gabelkopf 183 hat eine zentrale Verbindungsbohrung 184 für die Aufnahme des vorderen Endes des als Rohr ausgebildeten Tragprofils 15 und zwei seitliche Verbindungsbohrungen 186 für die Aufnahme der Enden der Gabelbeine 179. Sowohl Gabelkopf 183, Halterung 173 und Verbindungsstück 171 sind an das Tragprofil 15 aufsteckbar. Die Fixierung dieser Komponenten mit dem Rohr des Tragprofils 15 kann stoff- oder kraftschlüssig mittels eines Adhäsivs, Schweissen, Schrauben oder Nieten erfolgen.

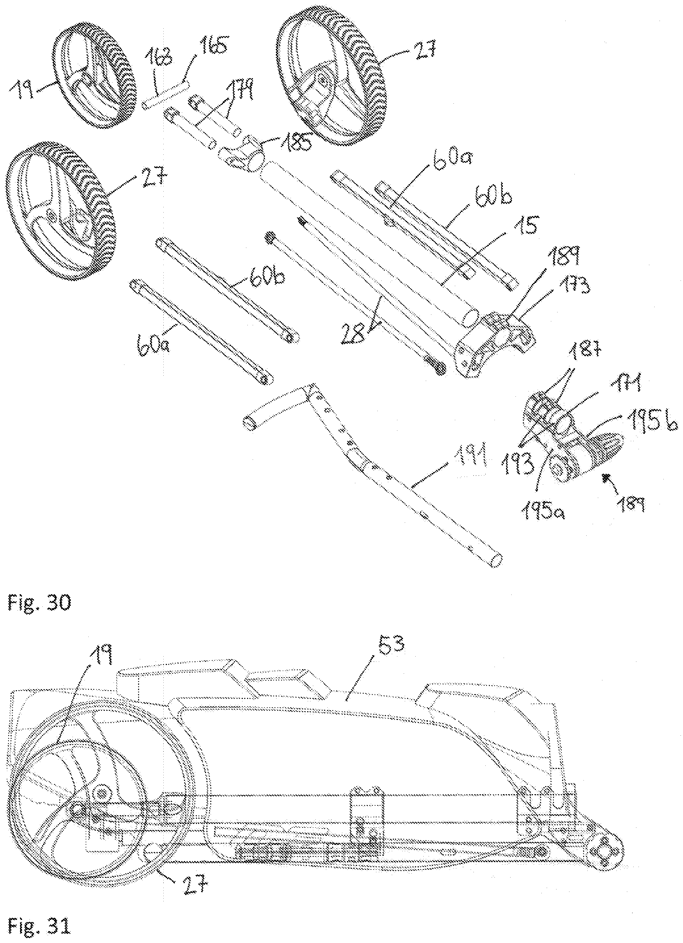

In der Fig. 30 sind die Einzelteile des Golftrolleys in einer Explosionsdarstellung gezeigt. Aus dieser ist ersichtlich, dass der Golftrolleys aus nur wenigen Einzelteilen zusammensetzbar ist. Insbesondere sind der Gabelkopf 183, der Halterung 173 und die Gelenkhalterung 171 an das Tragprofilrohr 15 aufsteckbar. Die Befestigung dieser Teile 171, 173 und 185 kann mittels Schrauben, Bolzen oder einem Kleber erfolgen. Im Falle der Gelenkhalterung 171 wird diese mit Klemmschrauben 188, im Falle der Halterung 173 mit Klemmschrauben 189 am Tragprofilrohr 15 festgeklemmt. Der Gabelkopf 185 hingegen wird vorzugsweise mit einem Kleber mit dem Tragprofilrohr 15 verbunden, obwohl andere Befestigungsformen ebenfalls denkbar sind.

Die Figur 31 zeigt die Golftasche- Golftrolley-Einheit von der Seite. Es ist erkennbar, dass Tragprofil 15 und Lenkstange 23 innerhalb der Peripherie der Golftasche 53 aufgenommen sind.

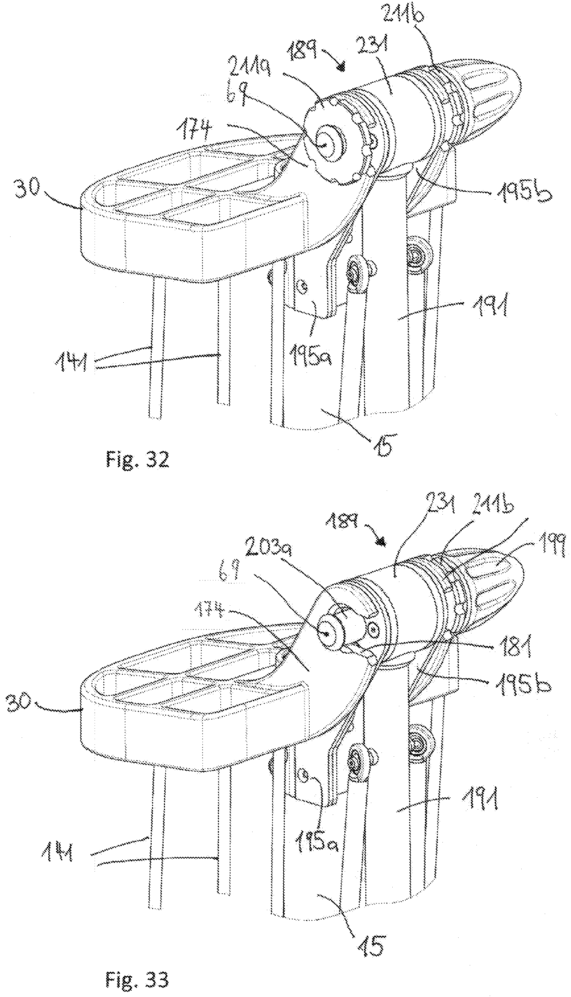

Die weiteren Figuren 31 bis 35 zeigen eine vorteilhafte Ausführungsform eines Drehgelenks 189 für die gelenkige Anbindung einer Griffstange 191 am Fahrgestell näher im Detail. Die Gelenkhalterung 171 besitzt ein rohrschellenartiges Anschlussstück 193, das das Tragprofilrohr 15 umgreift und mit den Spannschrauben 187 festgeschraubt werden kann. Zwei in einem Abstand voneinander angeordnete Wangen 195a, 195b stehen in einem Winkel von vorzugsweise ca. 45 Grad vom Anschlussstück 193 ab. An den Wangen ist ein Drehgelenk 189 ausgebildet, dessen Schwenkachse 69 sich im Abstand vom Tragprofil 15 befindet. Dies hat den Vorteil, dass im zusammengeklappten Zustand des Golftrolleys die Griffstange 191 sich im Wesentlichen parallel zum Tragprofil 15 erstrecken kann.

Das Drehgelenk 189 umfasst einen Drehknopf 199 und einen mit dem Drehknopf 199 in Verbindung stehenden Mechanismus zum Arretieren des Drehgelenks in einer einmal eingenommen Stellung. Am Drehgelenk 189 angeordnet ist die Griffstange 191, die sich um den Drehpunkt 69 verschwenken lässt.

Das Drehgelenk 189 besitzt eine Achse 201, die fest mit der Wange 195a verschraubt ist. Die Achse 201 besitzt einen Stutzen 203a, der sich durch eine Öffnung 205a in der Wange 195a erstreckt und ein Aussengewinde 207a aufweist. An der gegenüberliegenden Wange 195b ist ein Achsflansch 209 angeschraubt, der einen Stutzen 203b aufweist, der sich durch eine Öffnung 205b in der Wange 195b erstreckt und ein Aussengewinde 207b aufweist. Die Aussengewinde 207a, 207b der Stutzen 203a, 203b wirken mit Arretiermuttern 211a, 211b zusammen, mit deren Hilfe die Schenkel 174 des Kopfteils 30a zwischen den Arretiermuttern 211a, 211b und den Wangen 195a, 195b einklemmen lässt.

Auf den Stutzen 207b aufgesetzt ist der Drehknopf 199. Dieser steht über einen Kupplungsschaft 213 und ein mit letzterem fest verbundenen Gewinderohr 215 mit einer Spannmutter 217 in Verbindung, welche sich durch Drehen des Drehknopfs 199 hin- und herbewegen lässt. Die Spannmutter 217 ist mittels der Zylinderstifte 219 an einen axial beweglichen Kupplungsring 221 gekoppelt (Achse 223). Am Kupplungsring 211 ist eine erste Zahnscheibe 225 drehfest angeordnet. Die erste Zahnscheibe 225 kann mit einer zweiten identischen Zahnscheibe 227 zusammenwirken, die über die Zylinderstifte 229 drehfest an einem rotierbaren Gelenkkörper 231 angeordnet ist, an welchem wiederum die Griffstange 191 angeordnet ist.

Der Arretiermechanismus funktioniert wie folgt:
Mittels des Drehknopfs 199 wird die Griffstange 191 gelöst bzw. angezogen. Dazu wird der Drehknopf 199 für das Lösen ca. 1.5 im Gegenuhrzeigersinn gedreht und für das Spannen anschliessend wieder gleich viele Umdrehungen im Uhrzeigersinn. Das Drehmoment, welches beim Rotieren des Drehknopfs 199 entsteht, wird über einen Zylinderstift 233 auf den Kupplungsschaft 213 sowie das Gewinderohr 215, welche über einen Spannstift 235 miteinander verbunden sind, übertragen.

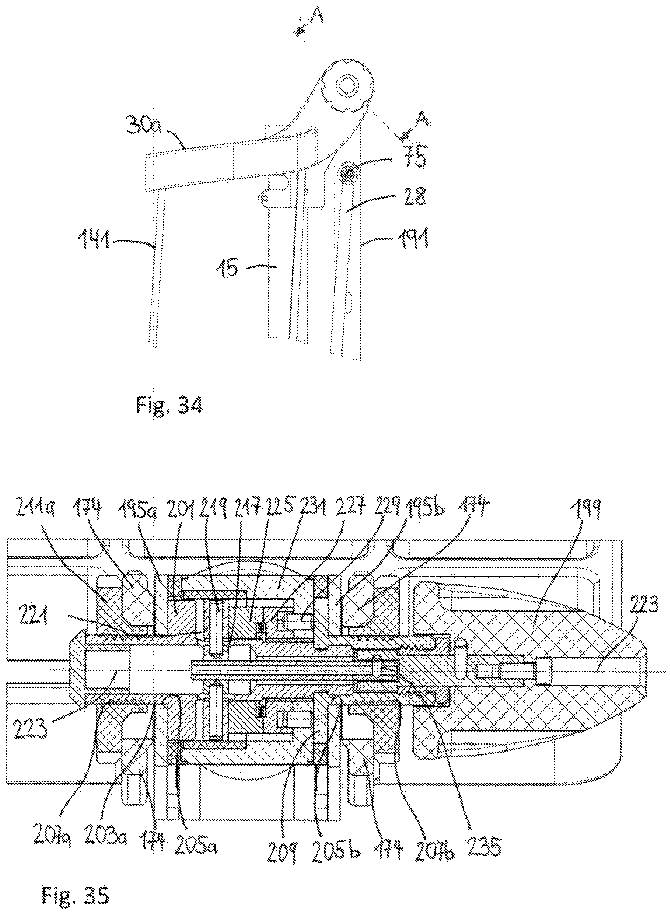

Über das Gewinde des Gewinderohrs 215 wird die Spannmutter 217 in Achsrichtung 223 verschoben. Wenn der Drehknopf 199 zum Lösen im Gegenuhrzeigersinn gedreht wird, so verschiebt sich die Spannmutter 217 in Fig. 35 nach links und im anderen Fall nach rechts.

Der Kupplungsring 221 ist mittels der beiden Zylinderstiften 219 mit der Spannmutter 217 verbunden. Auf den Kupplungsring 221 wiederum ist die erste Zahnscheibe 225 aufgeschraubt.

Der Kupplungsring 221 ist seinerseits mit der Achse 201 über Zylinderstifte (in den Fig.35 nicht ersichtlich) geführt, sodass sich dieser nur in Achsrichtung 223 bewegen lässt und ein anstehendes Drehmoment auf die Achse 201 übertragen wird.

Die Achse 201 ist mit der Wange 195a, welche fix mit dem Fahrgestell resp. Kopfteil verbunden ist, verschraubt und somit kann ein anstehendes Drehmoment auf das Fahrgestell abgeleitet werden.

Im angezogenen bzw. geschlossenen Zustand sind die Zahnscheibe 225 und die Zahnscheibe 227 formschlüssig miteinander verbunden. Wird nun ein Drehmoment über die Griffstange 191 auf den Gelenkkörper 231 eingeleitet, so wird dies über die Zylinderstifte 229 auf die Zahnscheibe 227 übertragen. Durch den Formschluss zwischen beiden Zahnscheiben 225, 227 kann dadurch, wie im vorhergehenden Abschnitt beschrieben, das Drehmoment abgeleitet werden.

Wird nun der Drehknopf im Gegenuhrzeigersinn gedreht, so verschieben sich die oben beschriebenen Teile 217, 221, 219 und 225 in axialer Richtung nach links. Nach 1.5 Umdrehungen befindet sich die Verzahnung der beiden Zahnscheiben 225, 227 nicht mehr im Eingriff miteinander und der Gelenkkörper 231, an welchem die Griffstange 191 montiert ist, ist frei drehbar.

Der Golftrolley und die Golftasche werden wie folgt verwendet: Beim erstmaligen Gebrauch ist die Ausgangslage der zusammengeklappte Golftrolley 11 und die separate Golftasche 53. Der Golftrolley wird zunächst senkrecht aufgestellt, die Arretierung der Lenkstange 23 gelöst und dann die Lenkstange vom Tragprofil weggeschwenkt. Dabei werden die Hinterräder gleichzeitig in die gespreizte Position verschwenkt. Die Lenkstange 23 wird auf eine Höhe eingestellt, die der Grösse des Golfspielers angepasst ist und dann festgestellt (Fig. 28 und 29). Danach wird die Golftasche auf den Golftrolley gesetzt, indem die Achsverlängerungen in die Ausnehmungen eingeführt werden. Danach kann die Golftasche zum Tragprofil hin verschwenkt und an diesem form- und/oder kraftschlüssig arretiert werden.

Nach dem erstmaligen Aufstellen des Golftrolleys und Fixieren der Golftasche an diesem können diese für den weiteren Gebrauch (Spielbetrieb, Transport im Auto und Lagerung) permanent zusammenbleiben, erstens, weil die Golftasche mit Golftrolley nur unwesentlich grösser als eine herkömmliche Golftasche ist, und zweitens, weil der aus Leichtbaumaterialien hergestellte Golftrolleys nur wenig Gewicht hat. Das heisst, Golftasche und Golftrolley bilden fortan eine Golftasche-Golftrolley-Einheit, allerdings mit dem Vorteil gegenüber den eingangs zitierten integrierten Golftaschenwagen, dass Golftrolley und Golftasche jederzeit mit einem Handgriff wieder getrennt werden können, beispielsweise, wenn der Golftrolley von verschiedenen Personen benützt werden soll. Auch ist denkbar, dass verschiedene Hersteller gemäss dem vorgeschlagenen erfinderischen Konzept Golftaschen für den erfindungsgemässen Golftrolley herstellen.

Zum Zusammenklappen der Golftasche-Golftrolley-Einheit löst der Golfspieler zuerst die Arretierung der Lenkstange, verschwenkt diese zum Tragprofil hin und arretiert sie dann wieder. Die Golftasche-Golftrolley-Einheit befindet sich dann in einer senkrechten Position. Wird die Golftasche-Golftrolley-Einheit gekippt, kann sie auf dem Weg vom Spielfeld zum Parkplatz platzsparend gestossen oder gezogen werden. Im Unterschied zu den eingangs erwähnten Golftaschenwagen muss die Golftasche-Golftrolley-Einheit nicht getragen werden, da die Räder des Golftrolleys in der zusammengeklappten Position immer noch aus der Peripherie der Golftasche herausragen. Zum Einladen in den Kofferraum eines Autos wird die Golftasche-Golftrolley-Einheit hingelegt (Lenkstange unten), die ganze Einheit angehoben und in den Kofferraum gelegt. Für das Tragen der Einheit kann ungefähr in der Mitte der Golftasche ein Traggriff vorgesehen sein (in den Figuren nicht gezeigt).

Bei der aufwändigeren Ausführungsform eines Golftrolleys mit einem Arretiermechanismus gemäss den Figuren 11 bis 14 entriegelt der Golfspieler zum Aufrichten des Golftrolleys zuerst die Lenkstange 23 und schwenkt diese dann noch oben, bis der Schnappmechanismus bei Erreichen der Endlage selbsttätig verrastet und die Betätigungsstange in der eingenommenen Position fixiert. Gleichzeitig mit dem Verschwenken der Lenkstange 23 wird die Golftaschen-Golf-Trolley-Einheit in eine Schräglage gebracht und auf den Hinterrädern abgestützt. Dabei kann die Entriegelung der Lenkstange 23 auch durch den beweglichen Handgriff 89 erfolgen. Dann kann der Bügel, falls dieser höhenverstellbar ist, noch auf die passende Höhe eingestellt werden.

Zum Zusammenklappen der Golftaschen-Golftrolley-Einheit fasst der Golfspieler zuerst den Handgriff 89, zieht diesen zurück und löst damit die Verrastung der Betätigungsstange 23. Danach wird die Lenkstange 23 nach unten geschwenkt und die Golftasche-Golftrolley-Einheit gleichzeitig in die aufrechte Position gebracht. In dieser Position kann die Lenkstange wieder verrastet werden, entweder durch einen separaten Schnappmechanismus oder mittels des unter Federspannung stehenden Bolzens 91. Wird der zusammengeklappte Golftrolley nach hinten gekippt, kann dieser gerollt werden. Im Regelfall wird die kombinierte Golftasche-Golftrolley-Einheit zusammen transportiert. Mittels eines Griffs an der Golftasche kann die Golftasche-Golftrolley-Einheit angehoben und im Kofferraum eines Autos verstaut werden.

Die Erfindung betrifft eine Golftasche für die Aufnahme einer Mehrzahl von Golfschlägern, die sich dadurch auszeichnet, dass im Bodenteil der Golftasche ein Radkasten für das Vorderrad eines dreirädrigen Golftrolleys ausgebildet ist. Die Golftasche ist ausgelegt, um an einem dreirädrigen Golftrolley befestigt zu werden. Der Golftrolley hat Vorderrad mit einer Achse, die an einander gegenüberliegenden Seiten des Vorderrads nach aussen ragende axiale Verlängerungen aufweist, die ein Auflager für die Golftasche bilden. Das eine Ende der Golftasche kann mittels Formschluss am Vorderrad und das andere Ende mittels eines Form- und/oder Kraftschlusses am Tragprofil des Golftrolleys bestetigt werden.

Die in der Beschreibung verwendeten Begriffe «Vorderrad», «Hinterräder» sind nicht limitierend zu verstehen, denn der erfindungsgemässe Golftrolley kann gestossen (Regelfall) oder auch gezogen werden. Auch können die einzelnen Merkmale in unterschiedlicher Kombination an einem Golftrolley verwirklicht sein.

### Legende

- 11: Golftaschen-Golftrolley-Einheit
- 13: Fahrgestell
- 15: Tragprofil
- 17: vorderes Ende des Tragprofils
- 19: Vorderrad
- 20: Aufrichteinheit
- 21: hinteres Ende des Tragprofils
- 23: Betätigungsstange
- 25: Hinterradeinheit
- 27: Hinterräder
- 28: Streben
- 29: Bodenteil
- 30: Kopfteil
- 31: Golfschläger
- 33: Boden des Bodenteils
- 35: Vorderseite
- 37: Rückseite
- 39: Seitenflächen
- 40: Radkasten
- 41: Abschrägung
- 43: Auflage- resp. Fahrbahnfläche
- 45: Ring- oder U-förmiger Deckel
- 47: Öffnungen
- 49: Golfschlägerschafte
- 51: Umhüllung
- 53: Golftasche
- 55: Fortsatz
- 57: Drehachse des Vorderrads
- 58: Längsmittellinie
- 59: Radstütze
- 60a, 60b: Parallelogrammhebel
- 61: Gelenk
- 63: Schwenkachse der Parallelogrammhebel
- 65: Drehachse
- 69: Schwenkachse
- 71: Strebe
- 73, 75: Drehpunkte der Strebe
- 77: Röhren
- 79: Drehgelenk
- 81: Gelenkzapfen
- 82: Anschlussstück des Tragprofils
- 83: Bohrung der Betätigungsstange
- 85: Kanal
- 87: Seilzug
- 89: Handgriff
- 91: Arretierbolzen
- 93: Sackloch
- 97: Verbindungsstab
- 99: Bohrung des Arretierbolzens
- 101: Kopfteil
- 103: Ringabsatz
- 105: Anschlagteil
- 107: Endstück
- 109: Verbindungsteil
- 111: Druckfeder
- 113: Klemmhülse
- 115: Absatz
- 117: Feder
- 119: Bohrlochgrund
- 121: Bohrung
- 123: Konus
- 125: Hülse
- 127: Konusförmige Öffnung
- 129, 131: Führungsabschnitte des Handgriffs
- 133: Stift
- 135: Langlöcher in der Betätigungsstange
- 136: Bügel
- 137: Drehachse des Bügels
- 141: Verbindungsstäbe
- 143: Klammer
- 145: Einbuchtung der Klammer
- 147a, 147b: Seitenwände
- 149: Verbindungswand
- 151a, 151b: Stege
- 153a. 153b: Ausnehmungen
- 155: Rand
- 157: Standfüsse
- 159: Standfläche
- 161: Einbuchtungen der Golftasche
- 163: Radachse
- 165: Überstand der Radachse
- 167: Seitenteile der Golftasche
- 169: Linie
- 171: Verbindungsstück / Gelenkhalterung
- 172: U-förmige Ausnehmung des Kopfteils 30a
- 173: Halterung
- 174: Schenkel der Ausnehmung 172
- 177: Radgabel
- 179: Radgabelbein
- 180: U-förmige Ausnehmungen als Lager im Gabelbein
- 181: U-förmige Ausnehmungen im Kopfteil
- 183: Gabelkopf
- 184: Zentrale Verbindungsbohrung
- 185: Klemmschrauben
- 186: Seitliche Verbindungsbohrung
- 187: Klemmschrauben
- 188: Klemmschrauben
- 189: Drehgelenk
- 191: Griffstange
- 193: Anschlussstück
- 195a, 195b: Wangen
- 199: Drehknopf
- 201: Achse
- 203a, 203b: Stutzen
- 205a, 205b: Öffnungen in den Wangen 195a, 195b
- 207a, 207b: Aussengewinde Stutzen 203a, 203b
- 209: Achsflansch
- 211a, 211b: Arretiermutter
- 213: Kupplungsschaft
- 215: Gewinderohr
- 217: Spannmutter
- 219: Zylinderstifte217,
- 221: Kupplungsring
- 223: Längsachse
- 225: Erste Zahnscheibe
- 227: Zweite Zahnscheibe
- 229: Zylinderstifte
- 231: Gelenkkörper
- 233: Zylinderstift
- 235: Spannstift

## Patentansprüche

1. Golftasche (53), insbesondere zur lösbaren Befestigung an einem Golftrolley, mit einem Aufnahmeraum für eine Mehrzahl von Golfschlägern, umfassend
- ein Bodenteil (29),
- ein Kopfteil (30),
- ein Traggestell (141), das das Bodenteil (29) mit dem Kopfteil (30) verbindet, sowie
- eine um das Traggestell angeordnete Umhüllung (51), vorzugsweise aus einem textilen Material, die den Aufnahmeraum für die Golfschläger umgibt,
- wobei die Golftasche (53) ausgebildet ist, um an mindestens zwei Punkten an einem dreirädrigen Fahrgestell lösbar befestigt zu werden,
**dadurch gekennzeichnet,**
- **dass** im Bodenteil der Golftasche (53) ein Radkasten (40) für die Aufnahme des Vorderrads (19) eines dreirädrigen Golftrolleys vorgesehen ist, wobei im Aufnahmeraum für die Golfschläger seitlich und vor dem Radkasten noch Platz für Handgriffe der Golfschläger ist und das Bodenteil (29) ausgebildet ist, um sich an der Vorderradachse (163) des dreirädrigen Golftrolleys abzustützen.

2. Golftasche (53) nach Anspruch 1, **dadurch gekennzeichnet, dass** der Radkasten (40) als schlitzförmiger Aufnahmeraum ausgebildet ist.

3. Golftasche (53) nach Anspruch 1 oder 2, **dadurch gekennzeichnet, dass** der Radkasten (40) zwei einander gegenüberliegende Seitenwände (147a, 147b) hat, an deren hinteren Seitenkanten auf ungefähr halber Höhe Stege (151a, 151b) angeformt sind, die miteinander fluchtende Ausnehmungen (153a. 153b) zur Aufnahme der Vorderradachse (163) eines Golftrolleys aufweisen.

4. Golftasche (53) nach einem der Ansprüche 1 bis 3, **dadurch gekennzeichnet, dass** an der Unterseite des Bodenteils (29) eine Standfläche bildende Standfüsse (157) vorgesehen sind, wobei der axiale Abstand zwischen der Standfläche des Bodenteils (29) und den Ausnehmungen (153a, 153b) vorzugsweise so bemessen ist, dass die Lauffläche eines im Radkasten (40) aufgenommenen Vorderrads (19) mit der Standfläche im Wesentlichen fluchtet.

5. Golftasche (53) nach einem der Ansprüche 1 bis 4, **dadurch gekennzeichnet, dass** das Kopfteil (30) mittels mehrerer Stäbe (141) mit dem Bodenteil (29) verbunden ist, wobei die an der Rückseite der Golftasche (53) angeordneten Stäbe vorzugsweise eine Aussparung für die Aufnahme eines länglichen Tragprofils (15) eines Fahrgestells eines Golftrolleys definieren.

6. Golftasche (53) nach einem der Ansprüche 1 bis 5, **dadurch gekennzeichnet, dass** an den Radkasten (40) für das Vorderrad (19) anschliessend ein nach hinten offener Kanal für die Aufnahme des Tragprofils, insbesondere eines Tragprofilrohrs, eines Golftrolleys vorgesehen ist.

7. Dreirädriger Golftrolley zur Aufnahme einer Golftasche (53), mit einem Fahrgestell umfassend
- ein Vorderrad (19) und
- zwei Hinterräder (27),
- wobei die Hinterräder (27) jeweils mittels zweier Parallelogrammhebel am Fahrgestell angelenkt sind und von einer schmalen Transportstellung in eine gespreizte Fahrstellung und umgekehrt bewegbar sind,
- eine am Fahrgestell beweglich angeordnete Lenkstange , die mittels zweier Streben mit den Parallelogrammhebeln verbunden ist, wobei die Hinterräder (27) durch die Lenkstange von der Transportstellung in die Fahrstellung und umgekehrt bewegbar sind,
**dadurch gekennzeichnet,**
**dass** der Golftrolley zur Aufnahme einer Golftasche (53) gemäss einem der Ansprüche 1 bis 6 konfiguriert ist, wofür das Vorderrad (19) eine Achse aufweist, deren axiale Verlängerungen (165) an einander gegenüberliegenden Seiten des Vorderrads (19) ein auf das Bodenteil (29) der Golftasche (53) abgestimmtes Auflager für die Golftasche (53) bilden, so dass das Vorderrad (19) in einem durch das Auflager gestützten Zustand des Bodenteils (29) im Radkasten (40) des Bodenteils der Golftasche (53) aufgenommen ist.

8. Golftrolley nach Anspruch 7, **dadurch gekennzeichnet, dass** am Fahrgestell eine Radgabel (177) mit U-förmigen Ausnehmungen (180) vorgesehen oder ausgebildet ist, die der Aufnahme der Vorderradachse (163) dienen.

9. Golftrolley nach Anspruch 7 oder 8, **dadurch gekennzeichnet, dass** die Achse (163) des Vorderrads (19) auf beiden Seiten die Radgabel (177) um einen bestimmten Überstand überragt, wodurch die axialen Verlängerungen (165) gebildet sind.

10. Golftrolley nach einem der Ansprüche 7 bis 9, **dadurch gekennzeichnet, dass** die Hinterräder (27) durch eine axiale Verschiebung der Lenkstange (23;191) oder durch Verschwenken der Lenkstange (23;191) um eine Schwenkachse (69) von der Transportin die Fahrstellung und umgekehrt bewegbar sind.

11. Golftrolley nach Anspruch 10, **dadurch gekennzeichnet, dass** das Fahrgestell ein längliches Tragprofil (15), insbesondere ein Tragprofilrohr, aufweist, wobei die Lenkstange (23;191) über ein Verbindungsstück (171) am Tragprofil (15) angeordnet ist derart, dass die Schwenkachse (69) sich eine bestimmte Distanz hinter dem Tragprofil (15) befindet.

12. Golftrolley nach einem der Ansprüche 7 bis 11, **dadurch gekennzeichnet, dass** am Fahrgestell Verbindungsmittel (211a, 195a, 211b, 195b) zur Herstellung einer form- und/oder kraftschlüssigen Verbindung mit einer Golftasche (53) vorgesehen sind.

13. Golftrolley nach einem der Ansprüche 7 bis 12, **dadurch gekennzeichnet, dass** die Parallelogrammhebel (60a, 60b) an einer Halterung (173) schwenkbar angeordnet sind derart, dass die Schwenkachsen (63) der Parallelogrammhebel (60a, 60b) jeweils in kurzem Abstand seitlich und hinter dem Tragprofil (15) verläuft.

14. Golftrolley nach einem der Ansprüche 7 bis 13, **dadurch gekennzeichnet, dass** in der Transportstellung die Drehachsen (65) der Hinterräder (27) einerseits und die Drehachse (57) des Vorderrades (19) andererseits in Fahrtrichtung des Golftrolleys voneinander beabstandet sind.

15. Golftasche-Golftrolley-Einheit mit einer Golftasche (53) nach einem der Ansprüche 1 bis 6 und einem Golftrolley gemäss einem der Ansprüche 7 bis 14.

## Claims

1. Golf bag (53), in particular for releasably securing to a golf trolley, having an accommodation space for a plurality of golf clubs, comprising
- a bottom part (29),
- a head part (30),
- a support frame (141) which connects the bottom part (29) to the head part (30), and
- a cover (51), arranged around the support frame and preferably made from a textile material, which surrounds the accommodation space for the golf clubs,
- wherein the golf bag (53) is designed to be releasably secured to a three-wheeled chassis at at least two points,
**characterized in that,**
- a wheel housing (40) for accommodating the front wheel (19) of a three-wheeled golf trolley is provided in the bottom part of the golf bag (53), wherein, in the accommodation space for the golf clubs, there is still room at the sides and in front of the wheel housing for the handles of the golf clubs, and that the bottom part (29) is designed to support itself on the front wheel axle (163) of the three-wheeled golf trolley.

2. Golf bag (53) according to claim 1, **characterized in that** the wheel housing (40) is designed as a slot-shaped accommodation space.

3. Golf bag (53) according to claim 1 or 2, **characterized in that** the wheel housing (40) has two opposite side walls (147a, 147b), with webs (151a, 151b) formed approximately halfway up the rear side edges thereof, said webs have recesses (153a, 153b) aligned with one other for receiving the front wheel axle (163) of a golf trolley.

4. Golf bag (53) according to one of claims 1 to 3, **characterized in that** standing feet (157) forming a standing surface are provided on the under side of the bottom part (29), wherein the axial distance between the standing surface of the bottom part (29) and the recesses (153a, 153b) is preferably dimensioned such that the running surface of a front wheel (19) received in the wheel housing (40) is substantially flush with the standing surface.

5. Golf bag (53) according to one of claims 1 to 4, **characterized in that** the head part (30) is connected to the bottom part (29) by means of multiple rods (141), wherein the rods arranged on the rear side of the golf bag (53) preferably define a recess for receiving an elongated support profile (15) of a chassis of a golf trolley.

6. Golf bag (53) according to one of claims 1 to 5, **characterized in that** a channel is provided, connecting to the wheel housing (40) for the front wheel (19) and open to the rear for receiving the support profile, in particular a support profile tube, of a golf trolley.

7. Three-wheeled golf trolley for receiving a golf bag (53), having a chassis comprising
- a front wheel (19), and
- two rear wheels (27)
- wherein the rear wheels (27) are respectively articulated on the chassis by means of two parallelogram levers and can be moved from a narrow transport position into a splayed driving position and vice versa,
- a steering rod, arranged to be movable on the chassis, and is connected to the parallelogram levers by means of two struts, wherein the rear wheels (27) can be moved by the steering rod from the transport position into the driving position and vice versa,
**characterized in that**
the golf trolley is configured for receiving a golf bag (53) according to one of claims 1 to 6, for which reason the front wheel (19) has an axle whose axial extensions (165) on opposite sides of the front wheel (19) form a support for the golf bag (53) coordinated with the bottom part (29) of the golf bag (53), so that, in a state where the bottom part (29) is supported by the support, the front wheel (19) is received in the wheel housing (40) of the bottom part of the golf bag (53).

8. Golf trolley according to claim 7, **characterized in that** a wheel fork (177), having U-shaped recesses (180) which function to receive the front wheel axle (163), is provided or designed on the chassis.

9. Golf trolley according to claim 7 or 8, **characterized in that** the axle (163) of the front wheel (19) projects by a certain protrusion on both sides of the wheel fork (177), by which means the axial extensions (165) are formed.

10. Golf trolley according to one of claims 7 to 9, **characterized in that** the rear wheels (27) can be moved from the transport position into the driving position and vice versa by an axial displacement of the steering rod (23; 191) or by pivoting the steering rod (23; 191) about a pivot axis (69).

11. Golf trolley according to claim 10, **characterized in that** the chassis has an elongated support profile (15), in particular a support profile tube, wherein the steering rod (23, 191) is arranged on the support profile (15) via a connecting piece (171) in such a way that the pivot axis (69) is located at a certain distance behind the support profile (15).

12. Golf trolley according to one of claims 7 to 11, **characterized in that** connecting means (211a, 195a, 211b, 195b) are provided on the chassis to establish a positive and/or non-positive connection to a golf bag (53).

13. Golf trolley according to one of claims 7 to 12, **characterized in that** the parallelogram levers (60a, 60b) are pivotably arranged on a holder (173) in such a way that the pivot axes (63) of the parallelogram levers (60a, 60b) are respectively a short distance to the side and behind the support profile (15).

14. Golf trolley according to one of claims 7 to 13, **characterized in that**, in the transport position, the axes of rotation (65) of the rear wheels (27) on the one hand and the axis of rotation (57) of the front wheel (19) on the other, are spaced apart from one another in the driving direction of the golf trolley.

15. Golf bag-golf trolley unit having a golf bag (53) according to one of claims 1 to 6 and a golf trolley according to one of claims 7 to 14.

## Revendications

1. Sac de golf (53), destiné notamment à être fixé de manière amovible sur un chariot de golf, pourvu d'un espace récepteur pour une pluralité de clubs de golf, comprenant
- une partie (29) formant fond inférieur,
- une partie haute (30),
- un châssis porteur (141), qui relie la partie (29) formant fond inférieur avec la partie haute (30), ainsi
- qu'une housse (51), placée autour du châssis porteur, de préférence en une matière textile, qui entoure l'espace récepteur pour les clubs de golf,
- le sac de golf (53) étant conçu pour être fixé de manière amovible par au moins deux points sur un châssis à trois roues,
**caractérisé**
- **en ce que** dans la partie formant fond inférieur du sac de golf (53) est prévu un passage de roue (40), destiné à recevoir la roue avant (19) d'un chariot de golf à trois roues, dans l'espace récepteur pour les clubs de golf restant latéralement et à l'avant du passage de roue encore de la place pour les manches des clubs de golf et la partie (29) formant fond inférieur étant conçue pour être soutenue sur l'essieu avant (163) du chariot de golf à trois roues.

2. Sac de golf (53) selon la revendication 1, **caractérisé en ce que** le passage de roue (40) est conçu sous la forme d'un espace récepteur en forme de fente.

3. Sac de golf (53) selon la revendication 1 ou 2, **caractérisé en ce que** le passage de roue (40) possède deux parois latérales (147a, 147b) placées en vis-à-vis, sur les arêtes arrière desquelles, à environ mi-hauteur sont surmoulées des barrettes (151a, 151b) qui comportent des évidements (153a. 153b) alignés les uns sur les autres, pour recevoir l'essieu avant (163) d'un chariot de golf.

4. Sac de golf (53) selon l'une quelconque des revendications 1 à 3, **caractérisé en ce que** sur la face inférieure de la partie (29) formant fond inférieur sont prévus des pieds de support (157) constituant une surface de pose, l'écart axial entre la surface de pose de la partie (29) formant fond inférieur et les évidements (153a, 153b) étant dimensionné de préférence de telle sorte que la surface de roulement d'une roue avant (19) réceptionnée dans le passage de roue (40) soit sensiblement alignée avec la surface de pose.

5. Sac de golf (53) selon l'une quelconque des revendications 1 à 4, **caractérisé en ce que** la partie haute (30) est reliée au moyen de plusieurs barres (141) avec la partie (29) formant fond inférieur, les barres placées sur le côté arrière du sac de golf (53) définissant de préférence une encoche, destinée à recevoir un profilé porteur (15) allongé d'un châssis d'un chariot de golf.

6. Sac de golf (53) selon l'une quelconque des revendications 1 à 5, **caractérisé en ce que** sur le passage de roue (40) pour la roue avant (19) est prévu dans la continuité un canal ouvert sur l'arrière, destiné à recevoir le profilé porteur, notamment d'un tube de profilé porteur d'un chariot de golf.

7. Chariot de golf à trois roues, destiné à recevoir un sac de golf (53), pourvu d'un châssis, comprenant
- une roue avant (19) et
- deux roues arrière (27),
- les roues arrière (27) étant articulées chacune sur le châssis au moyen de deux leviers à parallélogramme et étant déplaçables d'une position de transport étroite dans une position de déplacement déployée et inversement,
- un guidon, placé de manière déplaçable sur le châssis, qui au moyen de deux entretoises, est relié avec les leviers à parallélogramme, les roues arrière (27) étant déplaçables par le guidon de la position de transport dans la position de déplacement et inversement,
**caractérisé,**
**en ce que** le chariot de golf est configuré pour recevoir un sac de golf (53) selon l'une quelconque des revendications 1 à 6, à quelle fin, la roue avant (19) comporte un essieu, dont les prolongements axiaux (165) constituent sur des côtés en vis-à-vis de la roue avant (19) un appui pour le sac de golf (53), adapté à la partie (29) formant fond inférieur du sac de golf (53), de sorte que lorsque la partie (29) formant fond inférieur est soutenue par l'appui, la roue avant (19) soit réceptionnée dans le passage de roue (40) de la partie formant fond inférieur du sac de golf (53).

8. Chariot de golf selon la revendication 7, **caractérisé en ce que** sur le châssis est prévue ou conçue une fourche de roue (177) pourvue d'évidements (180) en forme de U, qui servent à recevoir l'essieu avant (163).

9. Chariot de golf selon la revendication 7 ou 8, **caractérisé en ce que** l'essieu (163) de la roue avant (19) saillit sur les deux côtés au-delà de la fourche de roue (177) de la valeur d'un certain surplomb, par lequel sont constitués les prolongements (165) axiaux.

10. Chariot de golf selon l'une quelconque des revendications 7 à 9, **caractérisé en ce que** les roues arrière (27) sont déplaçables de la position de transport dans la position de déplacement et inversement par un coulissement axial du guidon (23 ; 191) ou par pivotement du guidon (23 ; 191) autour d'un axe de pivotement (69).

11. Chariot de golf selon la revendication 10, **caractérisé en ce que** le châssis comporte un profilé porteur (15) allongé, notamment un tube de profilé porteur, le guidon (23 ; 191) étant placé par l'intermédiaire d'une pièce de liaison (171) sur le profilé porteur (15), de telle sorte que l'axe de pivotement (69) se trouve de la valeur d'une certaine distance derrière le profilé porteur (15).

12. Chariot de golf selon l'une quelconque des revendications 7 à 11, **caractérisé en ce que** sur le châssis sont prévus des moyens de liaison (211a, 195a, 211b, 195b), destinés à établir une liaison par complémentarité de forme et / ou de force avec un sac de golf (53).

13. Chariot de golf selon l'une quelconque des revendications 7 à 12, **caractérisé en ce que** les leviers à parallélogramme (60a, 60b) sont placés de manière à pouvoir pivoter sur une monture (173), de telle sorte que les axes de pivotement (63) des leviers à parallélogramme (60a, 60b) s'écoulent chacun avec un court écart latéralement du profilé porteur (15) et derrière celui-ci.

14. Chariot de golf selon l'une quelconque des revendications 7 à 13, **caractérisé en ce que** dans la position de transport, les axes de rotation (65) des roues arrière (27) d'une part et l'axe de rotation (57) de la roue avant (19) d'autre part sont écartés les uns des autres dans la direction de roulement du chariot de golf.

15. Unité, constituée d'un sac de golf - d'un chariot de golf, pourvue d'un sac de golf (53) selon l'une quelconque des revendications 1 à 6 et d'un chariot de golf selon l'une quelconque des revendications 7 à 14.
